# EUROPEAN PATENT APPLICATION

(11) **EP 4 818 542 A1**
(43) Date of publication of application: **07.10.2026**
(21) Application number: 24897656.5
(22) Date of filing: 28.11.2024
(51) Int. Cl.: F16D 13/60, F16D 13/74, F16D 67/02, F16H 3/48

(54) **CLUTCH HUB AND TWO-SPEED TRANSMISSION**

(30) Priority: 01.12.2023 JP 2023204098
(71) Applicant: NSK Ltd., Tokyo 141-8560 (JP)
(72) Inventor: TAKAHASHI, Masaru, Fujisawa-shi, Kanagawa 251-8501 (JP); KISHIDA, Hirotaka, Fujisawa-shi, Kanagawa 251-8501 (JP)
(74) Representative: Müller-Boré & Partner Patentanwälte PartG mbB
(86) International application number: PCT/JP2024/042189
(87) International publication number: WO 2025/115972

(57) **Abstract**

A clutch hub includes: a cylindrical portion having a first engaging portion arranged at a portion on a first side in an axial direction of an outer circumferential surface thereof and into which a component of a friction clutch device engages, a second engaging portion arranged on a second side in the axial direction of the outer circumferential surface and into which a component of a device separate from the friction clutch device engages, and oil holes that penetrate in a radial direction through a plurality of locations in the same range in the axial direction as the first engaging portion; and a side plate portion extending inward in the radial direction from an end portion on the first side in the axial direction of the cylindrical portion, the cylindrical portion having a damming surface at an intermediate portion in the axial direction located farther on the second side in the axial direction than the oil holes on an inner circumferential surface thereof, the damming surface facing the first side in the axial direction, with an inner diameter of the damming surface being less than or equal to an inner diameter of a portion having a smallest inner diameter of a portion of the inner circumferential surface located farther on the first side in the axial direction than the damming surface.

## Description

### TECHNICAL FIELD

The present disclosure relates to a clutch hub and a two-speed transmission including the clutch hub.

### BACKGROUND ART

In response to the recent trend toward reducing fossil fuel consumption, research into electric vehicles and hybrid vehicles has progressed and some of these vehicles are already being implemented. Unlike internal combustion engines, which are powered by directly burning fossil fuels, electric motors, which are the power source for electric vehicles and hybrid vehicles, generally generate maximum torque at startup, and torque and rotational speed characteristics of an output shaft are favorable for automotive use, and thus there is no need to necessarily provide a transmission like in general vehicles that are powered by internal combustion engines as a drive source. However, even in a case in which an electric motor is used as a drive source, by providing a transmission, it is possible to improve acceleration performance and high-speed performance. More specifically, by providing a transmission, a relationship between running speed and acceleration of the vehicle can be made smoother, similar to that of a vehicle equipped with an engine and a transmission in a power transmission system thereof.

WO2022/074958 discloses a two-speed transmission structure that can switch between a low reduction ratio mode in which a reduction ratio between an input member and an output member is small, and a high reduction ratio mode in which the reduction ratio is larger than that in the low reduction ratio mode. This conventional two-speed transmission switches between the low reduction ratio mode and the high reduction ratio mode by switching between a mode of a first engaging device provided between the input member and a rotating member and a mode of a second engaging device provided between a stationary portion and the rotating member.

The first engaging device is configured by a multi-plate clutch in which a plurality of first friction plates and a plurality of second friction plates are alternately stacked. In addition, the second engaging device is configured to be able to switch between a mode in which an inner diameter side cylindrical member and an outer diameter side cylindrical member are rotatable relative to each other and a mode in which they are not rotatable relative to each other by switching an engagement state between an engaging pin and an engaging recessed portion based on rotation of a selection plate. In this conventional two-speed transmission, the second friction plates are externally fitted onto a first cylindrical portion of a stepped cylindrical member of the rotating member so as not to be able to rotate but capable of displacement in an axial direction, and the inner diameter side cylindrical member is externally fitted onto a second cylindrical portion of the stepped cylindrical member so as not to be able to rotate.

In order to prevent wear, seizure, or the like, it is necessary to supply lubricating oil to a portion between the first friction plates and the second friction plates of the first engaging device, and to a portion between the inner diameter side cylindrical member and the outer diameter side cylindrical member of the second engaging device.

In this conventional two-speed transmission described in WO2022/074958, a shaft member of the rotating member has a through hole in a center portion thereof for circulating lubricating oil. That is, the lubricating oil flowing through the through hole moves outward in a radial direction while lubricating each part of the two-speed transmission. A portion of the lubricating oil lubricates the portion between the first friction plates and the second friction plates of the first engaging device, and the portion between the inner diameter side cylindrical member and the outer diameter side cylindrical member of the second engaging device.

JP2019-168101A discloses a clutch hub structure having oil holes for sending lubricating oil supplied from an inner side in a radial direction to a portion between first friction plates and second friction plates arranged on an outer side in the radial direction. As illustrated in FIG. 21, a clutch hub 200 of a first conventional structure described in JP2019-168101A includes a cylindrical portion 201 and a hollow circular plate-shaped side plate portion 202 that is bent inward in the radial direction from an end portion on a first side in an axial direction of the cylindrical portion 201. The side plate portion 202 is connected to one of two members that can be switched between a state in which relative rotation is disabled and a state in which relative rotation is enabled by a friction clutch device that includes the clutch hub 200.

The cylindrical portion 201 has a male spline portion 203 on an outer circumferential surface thereof. First friction plates and second friction plates are arranged on an outer side in the radial direction of the cylindrical portion 201.

One of the first friction plates and the second friction plates have an inner peripheral portion that, by engaging with a spline engagement with the male spline portion 203, are supported so as to be capable of relative displacement in the axial direction but not capable of rotation relative to the cylindrical portion 201.

The other of the first friction plates and the second friction plates have an outer peripheral portion that, by engaging with a spline engagement with a female spline portion provided on an inner circumferential surface of a cylindrical member connected to the other of the two members, are supported so as to be capable of relative displacement in the axial direction but not relative rotation with respect to the cylindrical member.

Thus, relative displacement in the axial direction between the first friction plates and the second friction plate is possible, making it possible to press the first friction plates and the second friction plates against each other to prevent relative rotation between the two members, and to release a force pressing the first friction plates and the second friction plates against each other to enable relative rotation between the two members.

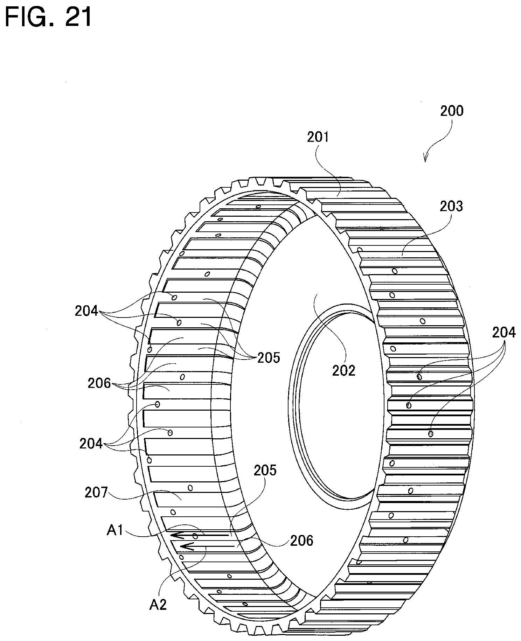

As illustrated in FIG. 21, the cylindrical portion 201 further has oil holes 204 that penetrate radially at multiple locations in the circumferential direction, and a recessed and protruding uneven portion 207 on an inner surface thereof, in which recessed portions 205 and protruding portions 206 are arranged alternately around the circumferential direction. End portions on an inner side in the radial direction of the oil holes 204 open into recessed portions 205. An end portion on a first side in the axial direction of the recessed portion 205 is closed by the side plate portion 202, and an end portion on a second side in the axial direction of the recessed portion 205 is open.

When the friction clutch device including the clutch hub 200 is in operation, lubricating oil is supplied from a lubricating oil supply portion to a region on an inner side in the radial direction of the cylindrical portion 201 of the clutch hub 200. The lubricating oil supplied to this region moves outward in the radial direction through this region due to the effects of centrifugal force and gravity, and reaches the inner circumferential surface of the cylindrical portion 201. The lubricating oil that reaches the inner circumferential surface of the cylindrical portion 201 flows into the recessed portions 205 of the recessed and protruding uneven portion 207, and then flows outward in the radial direction to the outside of the cylindrical portion 201 through the oil holes 204, thereby lubricating the first friction plates and the second friction plates.

FIGS. 22 (a) and 22(b) show a clutch hub 200a of a second conventional structure described in JP2006-077888A. Similar to the clutch hub 200 of the first conventional structure, a clutch hub 200a includes a cylindrical portion 201a having a male spline portion 203a, oil holes 204a, and a recessed and protruding uneven portion 207a provided with recessed portions 205a and protruding portions 206a, and a side plate portion 202a bent inward in the radial direction from an end portion on a first side in the axial direction of the cylindrical portion 201a. The cylindrical portion 201a further has dam portions 208 at end portions on a second side in the axial direction of the recessed portions 205a of the recessed and protruding uneven portion 207a, for damming up the lubricating oil that flows along inner surfaces of the recessed portions 205a to the second side in the axial direction.

### CITATION LIST

### PATENT LITERATURE

Patent Literature 1: WO2022/074958
Patent Literature 2: JP2019-168101A
Patent Literature 3: JP2006-077888A

### SUMMARY OF INVENTION

### TECHNICAL PROBLEM

In the two-speed transmission described in WO2022/074958, in order to reduce the size and/or simplify the structure, it is conceivable to make an outer diameter of a portion of the rotating member onto which the second friction plates of the first engaging device are externally fitted the same as an outer diameter of a portion of the rotating member onto which the inner diameter side cylindrical member of the second engaging device is externally fitted. In this case, it is possible to use the clutch hub 200 of the first conventional structure described in JP2019-168101A or the clutch hub 200a of the second conventional structure described in JP2006-077888A in place of the stepped cylindrical member of the rotating member. More specifically, the second friction plates can be externally fitted onto a portion on the first side in the axial direction of the male spline portion 203, 203a of the clutch hub 200, 200a in a manner that allows relative displacement in the axial direction but prevents relative rotation, and the inner diameter cylindrical member can be externally fitted and fixed onto a portion on the second side in the axial direction of the male spline portion 203, 203a.

However, the clutch hub 200 of the first conventional structure and the clutch hub 200a of the second conventional structure are not designed to have two different components externally fitted onto the male spline portion 203, 203a. As a result, it may not be possible to supply a sufficient amount of lubricating oil to the area between the first friction plates and the second friction plates of the first engaging device, and/or to the area between the inner diameter side cylindrical member and the outer diameter side member of the second engaging device.

In the clutch hub 200 of the first conventional structure, of the lubricating oil supplied from the lubricating oil supply portion that reaches the inner circumferential surface of the cylindrical portion 201, part of the lubricating oil that adheres to a bottom surface of the recessed portions 205 of the recessed and protruding uneven portion 207 is supplied outward in the radial direction of the cylindrical portion 201 through the oil holes 204. The remaining lubricating oil adhering to the bottom surface of the recessed portions 205 moves to the second side in the axial direction as illustrated by arrow A1 in FIG. 21 and flows out outward in the radial direction from the end portion on the second side in the axial direction of the cylindrical portion 201, and most of the lubricating oil adhering to the inner surfaces in the radial direction of the protruding portions 206 of the recessed and protruding uneven portion 207 moves to the second side in the axial direction as illustrated by arrow A2 in FIG. 21 and flows out outward in the radial direction from the end portion on the second side in the axial direction of the cylindrical portion 201. In short, most of the lubricating oil that reaches the inner circumferential surface of the cylindrical portion 201 does not pass through the oil holes 204, but flows out outward in the radial direction from the end portion on the second side in the axial direction of the cylindrical portion 201.

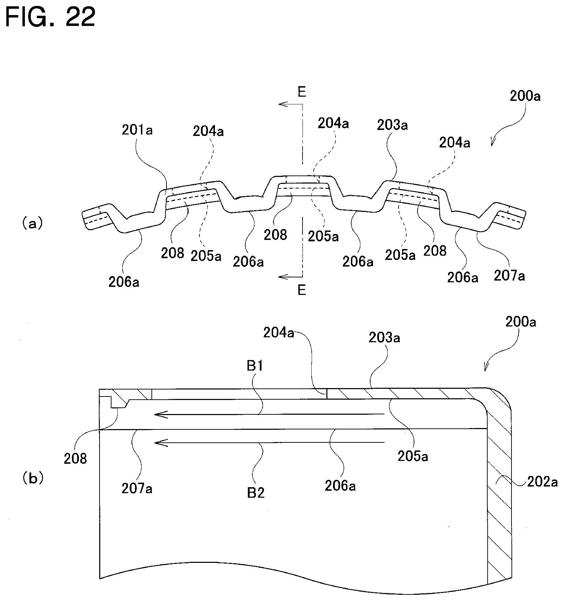

In the clutch hub 200a of the second conventional structure, the lubricating oil that is supplied from the lubricating oil supply portion and reaches the inner circumferential surface of the cylindrical portion 201a and enters the recessed portions 205a of the recessed and protruding uneven portion 207a is prevented by dam portions 208 from moving to the second side in the axial direction as illustrated by arrow B1 in FIG. 22B and flowing out outward in the radial direction from the end portion on the second side in the axial direction of the cylindrical portion 201a. However, of the lubricating oil supplied from the lubricating oil supply portion and reaching the inner circumferential surface of the cylindrical portion 201a, the lubricating oil that adheres to the inner surfaces in the radial direction of the protruding portions 206a of the recessed and protruding uneven portion 207a moves to the second side in the axial direction, as illustrated by arrow B2 in FIG. 22B, and flows out outward in the radial direction from the end portion on the second side in the axial direction of the cylindrical portion 201.

A purpose of the technique according to the present disclosure is to provide a clutch hub that can accommodate two different components and has a structure that makes it easy to ensure the amount of lubricating oil supplied to these components, and a two-speed transmission that includes the clutch hub.

### SOLUTION TO THE PROBLEM

A clutch hub according to one aspect of the present disclosure includes:
a cylindrical portion having a first engaging portion arranged at a portion on a first side in an axial direction of an outer circumferential surface thereof and into which a component of a friction clutch device engages, a second engaging portion arranged on a second side in the axial direction of the outer circumferential surface and into which a component of a device separate from the friction clutch device engages, and oil holes that penetrate in a radial direction through a plurality of locations in the same range in the axial direction as the first engaging portion; and
a side plate portion extending inward in the radial direction from an end portion on the first side in the axial direction of the cylindrical portion;
the cylindrical portion having a damming surface at an intermediate portion in the axial direction located farther on the second side in the axial direction than the oil holes on an inner circumferential surface thereof, the damming surface facing the first side in the axial direction, with an inner diameter of the damming surface being less than or equal to an inner diameter of a portion having a smallest inner diameter of a portion on the inner circumferential surface located farther on the first side in the axial direction than the damming surface.

In the clutch hub according to one aspect of the present disclosure,
the cylindrical portion may have a male spline portion in which recessed portions and protruding portions are alternatively arranged in a circumferential direction on the outer circumferential surface; and
in this case, the first engaging portion is formed by a portion on the first side in the axial direction of the male spline portion, and the second engaging portion is formed by a portion on the second side in the axial direction of the male spline portion.

In the clutch hub according to one aspect of the present disclosure,
the cylindrical portion may include:
a first side recessed and protruding uneven portion provided at a portion on the inner circumferential surface overlapping the first engaging portion in the radial direction and including recessed portions and protruding portions alternatively arranged in the circumferential direction;
a second side recessed and protruding uneven portion provided at a portion on the inner circumferential surface overlapping the second engaging portion in the radial direction and including recessed portions and protruding portions alternatively arranged in the circumferential direction;
a circumferential protruding wall portion formed at a portion adjacent to the first side in the axial direction of the second side recessed and protruding uneven portion on the inner circumferential surface; and
a circumferential groove formed at a portion between the first side recessed and protruding uneven portion and the second side recessed and protruding uneven portion on the inner circumferential surface.

In this case, end portions on an inner side in the radial direction of the oil holes open into the recessed portions of the first side recessed and protruding uneven portion; and
the damming surface is formed by a surface of an inner surface of the circumferential groove facing toward the first side in the axial direction and a side surface on the first side in the axial direction of the circumferential protruding wall portion.

In the clutch hub according to one aspect of the present disclosure,
the circumferential groove is formed at end portions on the second side in the axial direction of the protruding portions of the first side recessed and protruding uneven portion, so as to cross in the circumferential direction the end portions on the second side in the axial direction of the protruding portions. In this case, the circumferential groove is arranged adjacent to the first side in the axial direction of the circumferential protruding wall portion. More specifically, the circumferential groove is formed by circumferential groove pieces being formed at the end portions on the second side in the axial direction of the protruding portions of the first side recessed and protruding uneven portion and being intermittently present in the circumferential direction.

In a clutch hub according to one aspect of the present disclosure, the circumferential groove is formed at an intermediate portion in the axial direction of the circumferential protruding wall portion.

In a clutch hub according to one aspect of the present disclosure, it is preferable that the damming surface be formed around an entire circumference of the inner circumferential surface. More specifically, the circumferential protruding wall portion is formed over the entire circumference at a portion adjacent to the first side in the axial direction of the second side recessed and protruding uneven portion of the inner circumferential surface, and the circumferential groove, more specifically, the circumferential groove pieces, are formed at the end portions on the second side in the axial direction of all of the protruding portions of the first side recessed and protruding uneven portion. Alternatively, the circumferential protruding wall portion is formed over the entire circumference at a portion adjacent to the first side in the axial direction of the second side recessed and protruding uneven portion of the inner circumferential surface, and the circumferential groove is formed over the entire circumference at an intermediate portion in the axial direction of the circumferential protruding wall portion. In this case, the end portions on the inner side in the radial direction of the oil holes can be made to open into a part of the recessed portions of the first side recessed and protruding uneven portion, or can be made to open into all of the recessed portions of the first side recessed and protruding uneven portion.

In a clutch hub according to one aspect of the present disclosure, the oil holes and the damming surface can be arranged only at part of the recessed portions of the first side recessed and protruding uneven portion with respect to the circumferential direction. More specifically, at least one row of the recessed portions of the first side recessed and protruding uneven portion and the recessed portions of the second side recessed and protruding uneven portion is not provided with any of the oil holes, the circumferential protruding wall portion, and the circumferential groove so as to be continuous in a state of each having the same inner diameter.

In the clutch hub according to one aspect of the present disclosure,
the cylindrical portion has a circumferential projection formed at an intermediate portion in the axial direction over an entire circumference of the inner circumferential surface;
the damming surface is formed by a side surface on the first side in the axial direction of the circumferential projection.

In the clutch hub according to one aspect of the present disclosure,
the cylindrical portion includes:
a locking groove formed at an intermediate portion in the axial direction of the inner circumferential surface and extending in the circumferential direction; and
a ring-shaped member having a portion on an outer side in the radial direction that is locked in the locking groove; and
the circumferential projection is formed by a portion of the ring-shaped member that protrudes inward in the radial direction from the locking groove, that is, a portion on the inner side in the radial direction thereof.

A two-speed transmission according to one aspect of the present invention includes:
an input member rotatably supported by a stationary portion that does not rotate even during use;
an output member supported coaxially with the input member and capable of relative rotation with respect to the input member;
a rotating member supported coaxially with the input member and the output member and capable of relative rotation with respect to the input member and the output member;
a friction engagement portion having a first friction plate and a second friction plate supported to allow relative displacement in an axial direction, the friction engagement portion being provided between the input member or the output member and the rotating member, and configured to switch the input member or the output member and the rotating member to a state so as to rotate as a single unit by a force pressing the first friction plate and the second friction plate against each other, and configured to switch the input member or the output member and the rotating member to a state so as to rotate relative to each other by releasing the force pressing the first friction plate and the second friction plate against each other;
an engagement device provided between the stationary portion and the rotating member, and configured to switch between a state in which the rotating member can rotate relative to the stationary portion and a state in which the rotating member cannot rotate relative to the stationary portion;
a planetary reduction mechanism including a sun element, a ring element arranged around the sun element, a carrier arranged in the radial direction between the sun element and the ring element, and a plurality of planetary elements rotatably supported by the carrier and engaging with the sun element and the ring element in a manner that enables torque transmission;
an input element that is one of the sun element, the ring element, and the carrier, being connected to the input member so as to rotate integrally with the input member;
an output element that is one of the sun element, the ring element, and the carrier, and is a different element from the input element, being connected to the output member so as to rotate integrally with the output member;
a rotating element that is the remaining element of the sun element, the ring element, and the carrier excluding the input element and the output element, being connected to the rotating member so as to rotate integrally with the rotating member;
the rotating member including a clutch hub according to one aspect of the present disclosure;
the first friction plate or the second friction plate engaging with the first engaging portion of the cylindrical portion; and
a component of the engagement device being engaged with the second engaging portion of the cylindrical portion.

### EFFECT OF INVENTION

With a clutch hub and two-speed transmission according to one aspect of the present disclosure, two different components can be externally fitted, and it is easy to ensure that the amount of lubricating oil supplied to these components is secured.

### BRIEF DESCRIPTION OF DRAWINGS

[FIG. 1] FIG. 1 is a schematic cross-sectional view of a drive system incorporating a clutch hub according to a first example of an embodiment according to the present disclosure and a two-speed transmission including the clutch hub.
[FIG. 2] FIG. 2(a) is a schematic cross-sectional view illustrating a torque transmission path in a low reduction ratio mode of the two-speed transmission of the first example, and FIG. 2(b) is a schematic cross-sectional view showing the torque transmission path in a high reduction ratio mode of the two-speed transmission of the first example.
[FIG. 3] FIG. 3 is a cross-sectional view of the two-speed transmission of the first example.
[FIG. 4] FIG. 4 is a cross-sectional view of the two-speed transmission of the first example, with some parts omitted.
[FIG. 5] FIG. 5 is an exploded perspective view illustrating first friction plates and second friction plates of the friction clutch device of the two-speed transmission of the first example.
[FIG. 6] FIG. 6 is an enlarged view of part A in FIG. 4.
[FIG. 7] FIG. 7 is a perspective view illustrating a drive cam taken out from a pressing device of the friction clutch device.
[FIG. 8] FIG. 8 is an exploded perspective view illustrating a driven cam and rolling elements removed from the pressing device.
[FIG. 9] FIG. 9 is a perspective view of the clutch hub of the first example.
[FIG. 10] FIG. 10 is a cross-sectional view of the clutch hub of the first example.
[FIG. 11] FIG. 11(a) is an enlarged view of part B1 in FIG. 10, and FIG. 11(b) is an enlarged view of part B2 in FIG. 10.
[FIG. 12] FIG. 12(a) is a schematic cross-sectional view illustrating a torque transmission path in a low reduction ratio mode of a two-speed transmission of a second example of an embodiment according to the present disclosure, and FIG. 12(b) is a schematic cross-sectional view illustrating a torque transmission path in a high reduction ratio mode of the two-speed transmission of the second example.
[FIG. 13] FIG. 13 is a perspective view of a clutch hub of a third example of an embodiment according to the present disclosure.
[FIG. 14] FIG. 14 is a cross-sectional view of the clutch hub of the third example.
[FIG. 15] FIG. 15(a) is an enlarged view of part C1 in FIG. 14, and FIG. 15(b) is an enlarged view of part C2 in FIG. 14.
[FIG. 16] FIG. 16 is a perspective view of a clutch hub of a fourth example of an embodiment according to the present disclosure.
[FIG. 17] FIG. 17 is a perspective view of a clutch hub according of a fifth example of an embodiment according to the present disclosure.
[FIG. 18] FIG. 18 is a cross-sectional view of the clutch hub of the fifth example.
[FIG. 19] FIG. 19 is a cross-sectional view of a clutch hub of a sixth example of an embodiment according to the present disclosure.
[FIG. 20] FIG. 20 is an enlarged view of part D in FIG. 20.
[FIG. 21] FIG. 21 is a perspective view of a clutch hub of a first conventional structure.
[FIG. 22] FIG. 22(a) is a view of a portion in the circumferential direction of an end portion on an outer side in the radial direction of a clutch hub of a second conventional structure as viewed from the axial direction, and FIG. 22(b) is a cross-sectional view taken along the line E-E of FIG. 22(a).

### DESCRIPTION OF EMBODIMENTS

### [First Example]

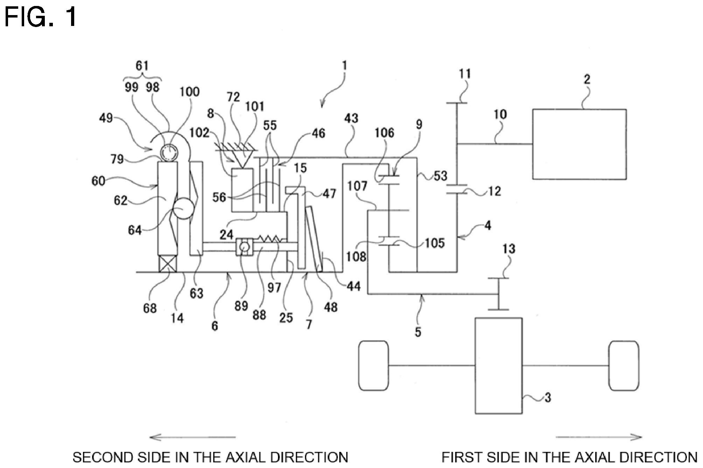

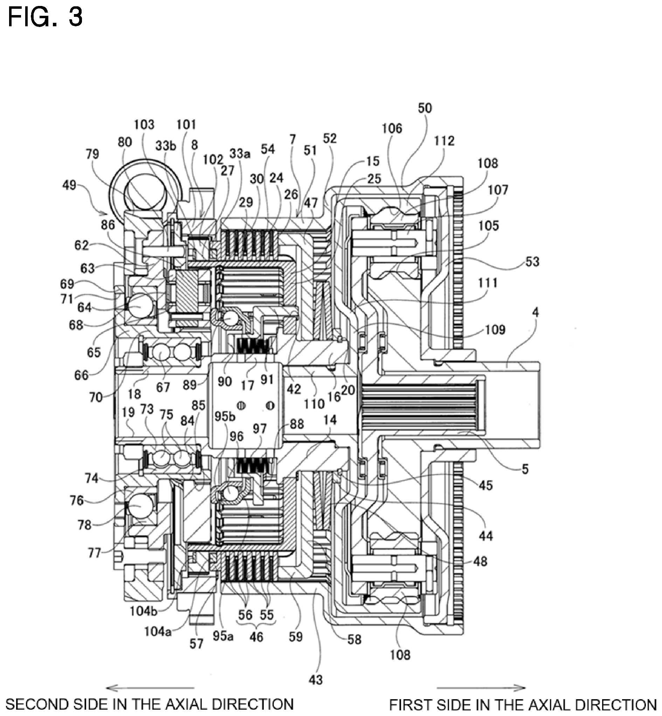

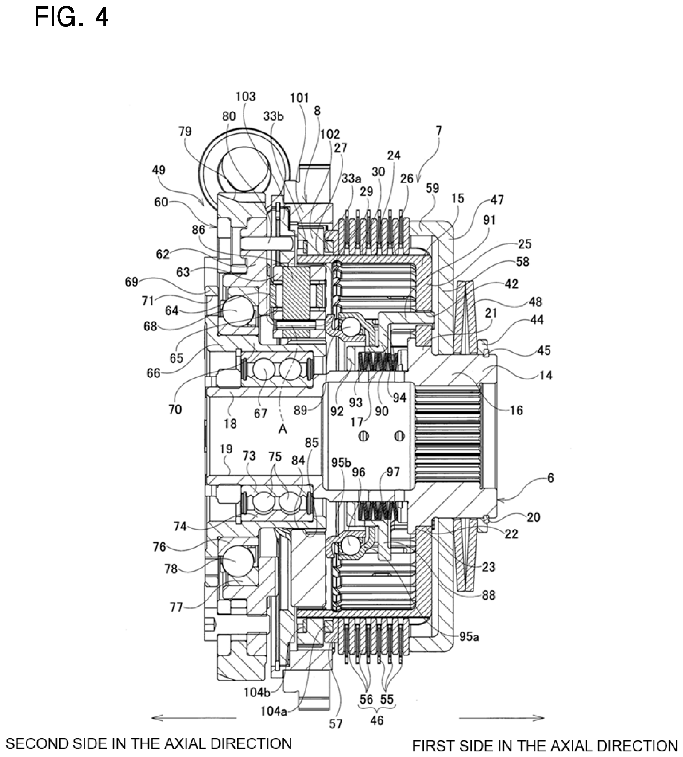

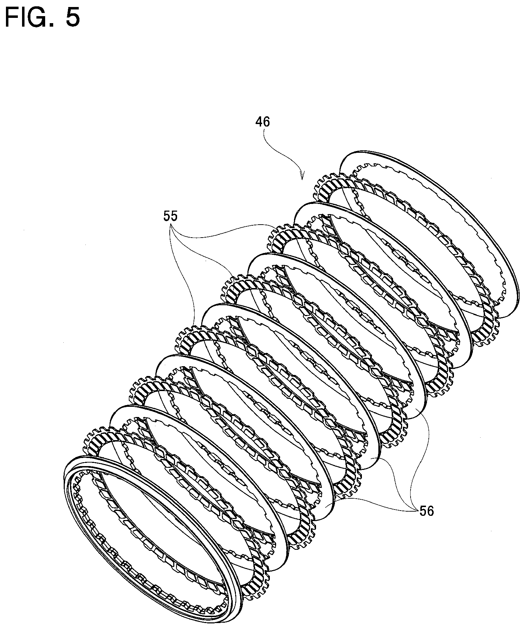

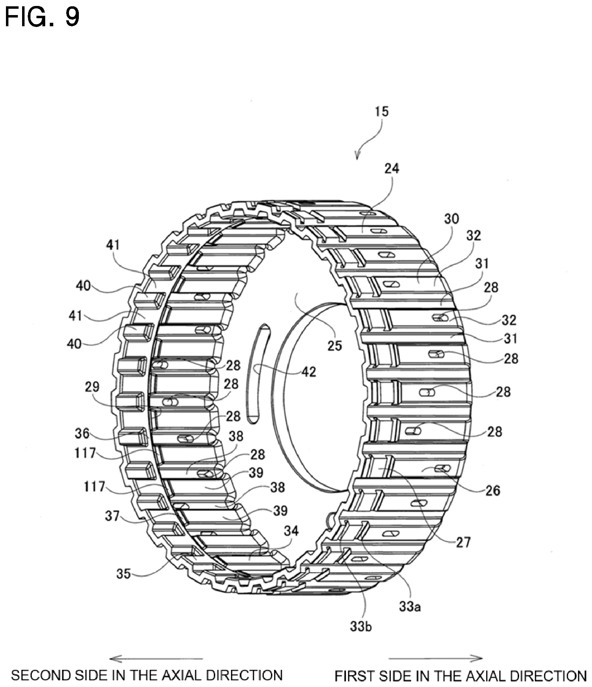

A first example of an embodiment according to the present disclosure will be described with reference to FIGS. 1 to 11(b).

### (Basic Configuration of Two-speed Transmission)

A two-speed transmission 1 of the present example is a two-speed transmission that can be applied to vehicles, including electric vehicles and hybrid vehicles, and is arranged between a drive source 2, such as an electric motor or an engine, and a differential device 3, and transmits output torque of the drive source 2 to a differential device 3 while increasing (decelerating) or without increasing the output torque.

The two-speed transmission 1 includes an input member 4, an output member 5, a rotating member 6, a friction engagement portion 46, an engagement device 8, and a planetary reduction mechanism 9.

In the following description, an axial direction, a radial direction, and a circumferential direction refer to an axial direction, a radial direction, and a circumferential direction of the input member 4 unless otherwise specified. The axial, radial, and circumferential directions of the input member 4 coincide with the axial, radial, and circumferential directions of the output member 5 and also coincide with the axial, radial, and circumferential directions of the rotating member 6. The first side in the axial direction refers to the right side in FIGS. 1 to 4, and the second side in the axial direction refers to the left side in FIGS. 1 to 4.

The input member 4 is rotatably supported by a stationary portion 72 that does not rotate even during use. The input member 4 can be rotationally driven by the drive source 2, and output torque of the drive source 2 is input to the input member 4. In the present example, the input member 4 is formed by a housing that houses the two-speed transmission 1 or the like, and is rotatably supported by a rolling bearing (not illustrated) or the like relative to the stationary portion 72 that does not rotate even during use.

In the present example, the input member 4 is configured to be cylindrical (hollow). In addition, the input member 4 also has an input gear 12 at an end portion on the first side in the axial direction thereof that engages with a drive gear 11 provided on an output shaft 10 of the drive source 2.

The output member 5 is supported coaxially with the input member 4 and supported so as to be able to rotate relative to the input member 4. The output member 5 is connected to an input portion of the differential device 3 so as to be able to transmit torque. In the present example, the output member 5 is supported on an inner side in the radial direction of the cylindrical input member 4 through the planetary reduction mechanism 9 so as to be able to rotate relative to the input member 4. The output member 5 also has an output gear 13 at an end portion on the first side in the axial direction. The output gear 13 engages with a gear provided at the input portion of the differential device 3.

The rotating member 6 is supported coaxially with the input member 4 and the output member 5 and is supported so as to be capable of rotating relative to the input member 4 and the output member 5. In the present example, the rotating member 6 is rotatably supported by the stationary portion 72 through the planetary reduction mechanism 9, a pressing device 49 of a friction clutch device 7, a bearing device 67, or the like.

The friction engagement portion 46 has at least one first friction plate 55 and one second friction plate 56 that are supported so as to be capable of relative displacement in the axial direction. In the present example, the friction engagement portion 46 is configured by alternately stacking a plurality of first friction plates 55 and a plurality of second friction plates 56.

The friction engagement portion 46 is provided between the input member 4 or the output member 5 and the rotating member 6, and has a function of pressing the first friction plates 55 and the second friction plates 56 against each other to switch the input member 4 or the output member 5 and the rotating member 6 to a state in which they rotate together, and a function of releasing the force pressing the first friction plates 55 and the second friction plates 56 against each other to switch the input member 4 or the output member 5 and the rotating member 6 to a state in which they rotate relative to each other. In the present example, the friction engagement portion 46 is provided between the input member 4 and the rotating member 6, and has the function of pressing the first friction plates 55 and the second friction plates 56 against each other to switch the input member 4 and the rotating member 6 into a state in which they rotate together, and the function of releasing the force pressing the first friction plates 55 and the second friction plates 56 against each other to switch the input member 4 and the rotating member 6 into a state in which they rotate relative to each other.

The engagement device 8 is provided between the stationary portion 72 and the rotating member 6 and has the function of switching between a rotatable state and a non-rotatable state of the rotating member 6 relative to the stationary portion 72.

The planetary reduction mechanism 9 has a sun element 105, a ring element 106 arranged around the sun element 105, a carrier 107 arranged in the radial direction between the sun element 105 and the ring element 106, and a plurality of planetary elements 108 that engage with the sun element 105 and the ring element 106 to enable torque transmission and are rotatably supported by the carrier 107.

In the two-speed transmission 1, the input member 4, the output member 5, the first friction plates 55 and the second friction plates 56 of the friction engagement portion 46, and an outer diameter side member 101 and an inner diameter side member 102 of the engagement device 8 are connected to the sun element 105, the ring element 106, the carrier 107, or the stationary portion 72 so that a reduction ratio between the input member 4 and the output member 5 can be switched between two levels, high and low, by switching a mode of the friction engagement portion 46 and a mode of the engagement device 8.

More specifically, an input element, which is one of the sun element 105, the ring element 106, and the carrier 107, is connected to the input member 4 so as to rotate integrally with the input member 4. An output element, which is one of the sun element 105, the ring element 106, and the carrier 107 and is a separate element from the input element, is connected to the output member 5 so as to rotate integrally with the output member 5. In addition, a rotating element, which is a remaining element of the sun element 105, the ring element 106, and the carrier 107 excluding the input element and the output element, is connected to the rotating member 6 so as to rotate integrally with the rotating member 6.

For example, the ring element 106 can be connected to the input member 4 to rotate integrally with the input member 4, the carrier 107 can be connected to the output member 5 to rotate integrally with the output member 5, and the sun element 105 can be connected to the rotating member 6 to rotate integrally with the rotating member 6.

Alternatively, the sun element 105 can be connected to the input member 4 so as to rotate integrally with the input member 4, the carrier 107 can be connected to the output member 5 so as to rotate integrally with the output member 5, and the ring element 106 can be connected to the rotating member 6 so as to rotate integrally with the rotating member 6.

Alternatively, the sun element 105 can be connected to the input member 4 so as to rotate integrally with the input member 4, the ring element 106 can be connected to the output member 5 so as to rotate integrally with the output member 5, and the carrier 107 can be connected to the rotating member 6 so as to rotate integrally with the rotating member 6.

In particular, the two-speed transmission 1 of the present example is characterized in that the rotating member 6 is configured to include a clutch hub 15 of the present example.

In the present example, the rotating member 6 is configured by fastening and fixing a shaft member 14 and the clutch hub 15 together.

The shaft member 14 has a stepped cylindrical shape. More specifically, the shaft member 14 has, in order from the first side in the axial direction, a large diameter cylindrical portion 16, a medium diameter cylindrical portion 17, and a small diameter cylindrical portion 18. In addition, the shaft member 14 also has a through hole 19 that passes through a center portion in the axial direction and allows lubricating oil to flow therethrough.

In the present example, the large diameter cylindrical portion 16 has a locking groove 20 formed over the entire circumference in an outer circumferential surface of a portion on the first side in the axial direction. Moreover, the large diameter cylindrical portion 16 also has a protruding portion 21 at an end portion on the second side in the axial direction, which protrudes outward in the radial direction farther than a portion adjacent on the first side in the axial direction. The protruding portion 21 has a mating surface portion 22 provided on an outer circumferential surface of a portion on the first side in the axial direction, and a step surface 23 that bends outward in the radial direction from an end portion on the second side in the axial direction of the fitting surface portion 22 and faces toward the first side in the axial direction.

### (Clutch Hub)

The clutch hub 15 of the present example has a cylindrical portion 24 and a side plate portion 25 that extends inward in the radial direction from an end portion on the first side in the axial direction of the cylindrical portion 24.

The cylindrical portion 24 is configured to have a generally cylindrical shape as a whole, and has a first engaging portion 26, a second engaging portion 27, oil holes 28, and a damming surface 29.

The first engaging portion 26 is arranged at a portion on the first side in the axial direction of the outer circumferential surface of the cylindrical portion 24. A component of the friction clutch device 7 is engaged with the first engaging portion 26. In the present example, the second friction plate 56 of the friction clutch device 7 engages with the first engaging portion 26.

The second engaging portion 27 is arranged at a portion on the second side in the axial direction of the outer circumferential surface of the cylindrical portion 24. The second engaging portion 27 is engaged with a component of a separate device from the friction clutch device. In the present example, the inner diameter side member 102 of the engagement device 8 is engaged with the second engaging portion.

The oil holes 28 penetrate the cylindrical portion 24 in the radial direction at a plurality of locations within the same range in the axial direction as the first engaging portion 26.

In particular, the clutch hub 15 of the present example is characterized by having a damming surface 29. The damming surface 29 is provided at an intermediate portion in the axial direction located farther on the second side in the axial direction than the oil holes 28 of the inner circumferential surface of the cylindrical portion 24, and faces toward the first side in the axial direction. The damming surface 29 has a structure in which the inner diameter thereof is equal to or smaller than an inner diameter of the smallest inner diameter portion of a portion located farther on the first side in the axial direction than the damming surface 29 of the inner circumferential surface of the cylindrical portion 24.

In the clutch hub 15 of the present example, the damming surface 29 is provided around the entire circumferential direction or around a part in the circumferential direction. Part of the lubricating oil supplied to the inner circumferential surface of the cylindrical portion 24 of the clutch hub 15, and more specifically, the lubricating oil supplied farther to the first side in the axial direction of the cylindrical portion 24 of the clutch hub 15 than the damming surface 29 flows to the second side in the axial direction and moves to a portion adjacent to the damming surface 29 on the first side in the axial direction. A force directed outward in the radial direction due to centrifugal force and gravity is applied to the lubricating oil, and thus the lubricating oil cannot easily flow over the damming surface 29 and is therefore blocked by the damming surface 29. Therefore, by appropriately providing a damming surface 29 around the entire circumferential direction or around a part in the circumferential direction, it is possible to appropriately adjust whether the lubricating oil flows out outward in the radial direction of the cylindrical portion 24 through the oil holes 28, or through a portion on the second side in the axial direction of the inner circumferential surface of the cylindrical portion 24 and/or an end surface on the second side in the axial direction of the cylindrical portion 24. Thus, it is possible to properly supply lubricating oil to both the first engaging portion 26 and the second engaging portion 27, which are located on the same cylindrical portion 24, on the outer circumferential surface of the cylindrical portion 24.

In the present example, the clutch hub 15 is applied to a two-speed transmission 1 of a vehicle. However, the clutch hub 15 in the present example is not limited to a two-speed transmission for a vehicle, and may be incorporated into various types of mechanical devices that include a friction clutch device for switching whether or not a second member can rotate relative to a first member, and an engagement device for switching whether or not a third member can rotate relative to the first member.

A configuration of the cylindrical portion 24, specifically a structure of an outer circumferential surface and/or an inner circumferential surface of the cylindrical portion 24, can take various forms depending on a structure of a member to which the clutch hub 15 is assembled, or a structure of members assembled and attached to the first engaging portion 26 and the second engaging portion 27. As for the structure of the outer circumferential surface and/or inner circumferential surface of the cylindrical portion 24, any structure can be arbitrarily applied, such as a spline structure in which recessed portions and protruding portions are alternately arranged in the circumferential direction, a structure including a single cylindrical surface, or a structure in which an engagement structure with a mating member is provided on a single cylindrical surface.

In the clutch hub 15 of the present example, the cylindrical portion 24 has a male spline portion 30 on an outer circumferential surface thereof, which is formed by alternately arranging recessed portions 31 and protruding portions 32 in the circumferential direction. The first engaging portion 26 is formed by a portion on the first side in the axial direction of the male spline portion 30, and the second engaging portion 27 is formed by a portion on the second side in the axial direction of the male spline portion 30.

In the present example, the cylindrical portion 24 has locking grooves 33a, 33b on the outer circumferential surface at portions located on both sides in the axial direction of the second engaging portions 27. The locking grooves 33a, 33b are composed of locking groove pieces formed to cross each of the plurality of protruding portions 32 of the male spline portion 30 in the circumferential direction.

The shape and size of the oil holes 28 are arbitrary as long as the lubricating oil can be properly discharged, and the opening shape of each oil hole 28 when viewed from the radial direction can be oval shape that extends in the axial direction when viewed from the radial direction, circular shape, rectangular shape, or other shape. In the present example, the opening shape of the oil holes 28 is an oval shape that extends in the axial direction.

The arrangement of the oil holes 28 is also arbitrary, as long as the lubricating oil can be properly discharged. The oil holes 28 can be arranged with one at each of a plurality of locations in the circumferential direction on the first side in the axial direction of the cylindrical portion 24, or a plurality of oil holes 28 can be arranged at the same location in the circumferential direction. In the present example, the oil holes 28 are arranged with one at each of a plurality of locations in the circumferential direction.

The oil holes 28 can be arranged such that positions in the axial direction of adjacent oil holes 28 in the circumferential direction are offset from each other, or they can be arranged so that their positions in the axial direction coincide. In the present example, the oil holes 28 are arranged such that the positions in the axial direction of adjacent oil holes 28 in the circumferential direction are offset from each other.

In the present example, the cylindrical portion 24 further includes a first side recessed and protruding uneven portion 34, a second side recessed and protruding uneven portion 35, a circumferential protruding wall portion 36, and a plurality of circumferential grooved pieces 117.

The first side recessed and protruding uneven portion 34 is provided on the inner circumferential surface of the cylindrical portion 24 at a portion that overlaps in the radial direction with the first engaging portions 26, and is formed by an alternating arrangement of recessed portions 38 and protruding portions 39 in the circumferential direction.

In the present example, the recessed portions 38 of the first side recessed and protruding uneven portion 34 is positioned at portions that overlap in the radial direction the protruding portions 32 of the male spline portion 30, and the protruding portions 39 of the first side recessed and protruding uneven portion 34 are positioned in a direction that overlap in the radial direction the recessed portions 31 of the male spline portion 30.

In the present example, the oil holes 28 are arranged with one each at the same position in the circumferential direction as the recessed portions 38 of the first side recessed and protruding uneven portion 34. An end portion on the inner side in the radial direction of each oil hole 28 opens into a recessed portion 38 of the first side recessed and protruding uneven portion 34, and an end portion on the outer side in the radial direction of each oil hole 28 opens into a protruding portion 32 of the male spline portion 30.

The second side recessed and protruding uneven portion 35 is provided on the inner circumferential surface of the cylindrical portion 24 at a portion that overlaps in the radial direction with the second engaging portions 27, and is formed by an alternating arrangement of recessed portions 40 and protruding portions 41 in the circumferential direction.

In the present example, the recessed portions 40 of the second side recessed and protruding uneven portion 35 are positioned at portions that overlap in the radial direction with the protruding portions 32 of the male spline portion 30, and the protruding portions 41 of the second side recessed and protruding uneven portion 35 are arranged at portions that overlap in the radial direction the recessed portions 31 of the male spline portion 30.

In the present example, an inscribed circle diameter of a bottom surface of the recessed portions 38 of the first side recessed and protruding uneven portion 34 and an inscribed circle diameter of a bottom surface of the recessed portions 40 of the second side recessed and protruding uneven portion 35 are equal to each other. In addition, an inscribed circle diameter of an inner surface in the radial direction of the protruding portions 39 of the first side recessed and protruding uneven portion 34 and an inscribed circle diameter of an inner surface of the protruding portions 41 of the second side recessed and protruding uneven portion 35 are equal to each other.

In other words, in the present example, the cylindrical portion 24 has an end surface shape that, when viewed from the axial direction, is a rectangular wave shape in the circumferential direction. In the present example, by adopting this configuration, a wall thickness of the cylindrical portion 24 becomes almost constant around the entire circumference, making it easier to reduce weight of the cylindrical portion 24.

The circumferential protruding wall portion 36 is formed on the inner circumferential surface of the cylindrical portion 24 at a portion adjacent to the first side in the axial direction of the second side recessed and protruding uneven portion 35. In the present example, the circumferential protruding wall portion 36 is provided around the entire circumference of the cylindrical portion 24 at a portion that overlaps in the radial direction one of the two locking grooves 33a, 33b provided on the outer circumferential surface of the cylindrical portion 24, specifically the locking groove 33a on the first side in the axial direction.

In the present example, an inner diameter of the circumferential protruding wall portion 36, more specifically an inner diameter of an inner surface in the radial direction that is the inner circumferential surface of the circumferential protruding wall portion 36, can be made smaller than an inner diameter of the protruding portions 39 of the first side recessed and protruding uneven portion 34 and the second side protruding portions 41 of the recessed and protruding uneven portion 35, and more specifically an inscribed circle diameter of an inner surface in the radial direction of the protruding portions 39 of the first side recessed and protruding uneven portion 34 and an inscribed circle diameter of an inner surface in the radial direction of the protruding portions 41 of the second side recessed and protruding uneven portion 35 (the circumferential protruding wall portion 36 protrudes inward in the radial direction more than the protruding portions 39 and the protruding portions 41), or can be made equal to the inner diameter (the inner surface in the radial direction of the circumferential protruding wall portion 36 is located on the same virtual cylindrical surface as the inner surface in the radial direction of the protruding portions 39 and the inner surface in the radial direction of the protruding portions 41), or can be made larger (the circumferential convex wall portion 36 is recessed outward in the radial direction more than the protruding portions 39 and the protruding portions 41). The inner diameter of the circumferential protruding wall portion 36 is preferably equal to the inner diameter of the protruding portions 39 and protruding portions 41.

In the present example, the inner diameter of the inner surface in the radial direction, which is the inner circumferential surface of the circumferential protruding wall portion 36, is equal to the inscribed circle diameter of the inner surface in the radial direction of the protruding portions 39 of first side the recessed and protruding uneven portion 34 and the inscribed circle diameter of the inner surface in the radial direction of the protruding portions 41 of the second side recessed and protruding uneven portion 35. Therefore, the inner surface in the radial direction of the protruding portions 41 of the second side recessed and protruding uneven portion 35 and the inner surface in the radial direction of the circumferential protruding wall portion 36 are smoothly continuous without any steps.

End portions on the first side in the axial direction of the protruding portions 41 of the second side recessed and protruding uneven portion 35 are continuous with end portions on the second side in the axial direction of the circumferential protruding wall portion 36 (the inner surface in the radial direction of the protruding portions 41 and the inner surface in the radial direction of the circumferential protruding wall portion 36 are smoothly continuous without any steps). The inner diameter of the recessed portions 40 of second side recessed and protruding uneven portion 35, more specifically, the inner diameter of the inner surface in the radial direction of the recessed portions 40, is larger than the inner diameter of the circumferential protruding wall portion 36. Therefore, end portions on the first side in the axial direction of the recessed portions 40 are closed by the side surface on the second side in the axial direction of the circumferential protruding wall portion 36.

A circumferential groove 37 is formed in a portion of the inner circumferential surface of the cylindrical portion 24 between the first side recessed and protruding uneven portion 34 and the second side recessed and protruding uneven portion 35. More specifically, the circumferential groove 37 is formed in a portion adjacent to the first side in the axial direction of the circumferential protruding wall portion 36, or in an intermediate portion in the axial direction of the circumferential protruding wall portion 36.

In the present example, the circumferential groove 37 is formed at the end portion on the second side in the axial direction of the protruding portions 39 of the first side recessed and protruding uneven portion 34, so as to cross in the circumferential direction the end portions on the second side in the axial direction of the protruding portions 39. Therefore, the circumferential groove 37 is arranged to be adjacent to the first side in the axial direction of the circumferential protruding wall portion 36. More specifically, the circumferential groove 37 is formed by circumferential groove pieces 117 formed at end portions on the second side in the axial direction of the protruding portions 39 of the first side recessed and protruding uneven portion 34.

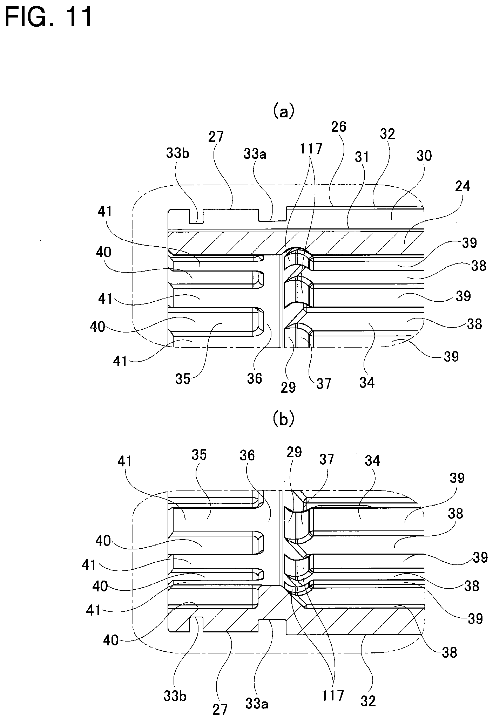

The shape of the circumferential groove 37 is arbitrary, as long as the side surface on the second side in the axial direction of the circumferential groove 37 can form a damming surface 29. The shape of the circumferential groove 37 can have cross-sectional shapes such as a concave arc shape, a concave rectangular shape, or a V-shape. In the present example, the circumferential groove 37 (circumferential groove pieces 117) has a concave arc-shaped cross-section, as illustrated in FIG. 11(a), with the deepest part being in the center portion in the axial direction.

The size of the circumferential groove 37 is arbitrary, as long as the side surface on the second side in the axial direction of the circumferential groove 37 can form a damming surface 29. The depth in the radial direction of the circumferential groove 37 can be made shallower than the depth in the radial direction of the recessed portions 38 of the first side recessed and protruding uneven portion 34, the same as the depth in the radial direction of the recessed portions 38, or deeper than the depth in the radial direction of the recessed portions 38. In the present example, the depth in the radial direction of the circumferential groove 37 (the depth in the radial direction of the deepest part) is shallower than the recessed portions 38 of the first side recessed and protruding uneven portion 34.

In the present example, the damming surface 29 is formed by a surface of the inner surface of the circumferential groove 37 that faces toward the first side in the axial direction and a side surface on the first side in the axial direction of the circumferential protruding wall portion 36. In other words, for lubricating oil flowing toward the second side in the axial direction through the recessed portions 38 of the first side recessed and protruding uneven portion 34, the side surface on the first side in the axial direction of the circumferential protruding wall portion 36 that closes the end portions on the second side in the axial direction of the recessed portions 38 functions as the damming surface 29. In addition, for lubricating oil flowing toward the second side in the axial direction through the protruding portions 39 of the first side recessed and protruding uneven portion 34, the surface of the inner surface of the circumferential groove 37 facing toward the first side in the axial direction functions as the damming surface 29.

An inner diameter of the damming surface 29 is less than or equal to an inner diameter of a portion of the inner circumferential surface of the cylindrical portion 24 located farther on the first side in the axial direction than the damming surface 29 and having the smallest inner diameter. In the present example, the inner diameter of the damming surface 29 is the same as the inscribed circle diameter of the protruding portions 39, which is the portion of the inner circumferential surface of the cylindrical portion 24 located farther on the first side in the axial direction than the damming surface 29 and having the smallest inner diameter.

In the clutch hub 15 of the present example, the damming surface 29 is formed around the entire circumference, that is, the damming surface 29 can be placed on all of the recessed portions 38 and protruding portions 39 of the first side recessed and protruding uneven portion 34. Alternatively, the damming surface 29 can be arranged in the circumferential direction on only part of the recessed portions 38 of the first side recessed and protruding uneven portion 34. In this case, the damming surface 29 is arranged on all of the protruding portions 39 of the first side recessed and protruding uneven portion 34, but not on some of the recessed portions 38. Oil holes 28 are not arranged in part of the recessed portions 38 where the damming surface 29 is not formed, and oil holes 28 may be arranged only in the remaining recessed portions 38 where the damming surface 29 is formed.

Since there is no damming surface 29, that is, there are no oil holes 28, circumferential convex wall portions 36, and circumferential groove 37, and the recessed portions 38 of the first side recessed and protruding uneven portion 34 and the recessed portions 40 of the second side recessed and protruding uneven portion 35 are continuous with the same inner diameter, the lubricating oil flowing toward the second side in the axial direction through the recessed portions 38 flows outward in the radial direction through the recessed portions 40 and past the end portion and end surface on the second side in the axial direction of the cylindrical portion 24. Therefore, by adjusting the number of recessed portions 38 and 40 that do not have oil holes 28 and the damming surface 29 to one or any number, or by not providing such a recessed portion, it becomes possible to adjust the amount of lubricating oil that flows outward in the radial direction through the oil holes 28 and the amount of lubricating oil that flows out outward in the radial direction past the end portions and end surfaces on the second side in the axial direction of the cylindrical portion 24.

In the present example, the circumferential protruding wall portion 36 is formed over the entire circumference of the inner circumferential surface of the cylindrical portion 24 in a portion adjacent to the first side in the axial direction of the second recessed and protruding uneven portion 35, and the circumferential groove 37 (circumferential groove pieces 117) is formed at the end portions on the second side in the axial direction of all the recessed portion 38 of the first side recessed and protruding uneven portion 34.

In the clutch hub 15 of the present example, the side plate portion 25 is formed as a hollow disc-shaped plate, and has through holes 42 that penetrate in the axial direction at a plurality of locations in the circumferential direction in an intermediate portion in the radial direction.

In the present example, the shaft member 14 and the clutch hub 15 are joined and fixed together by welding or the like, with a portion on an inner side in the radial direction of a side surface on the second side in the axial direction of the side plate portion 25 in contact with the stepped surface 23, and an inner circumferential surface of the side plate portion 25 externally fitted onto the fitting surface portion 22.

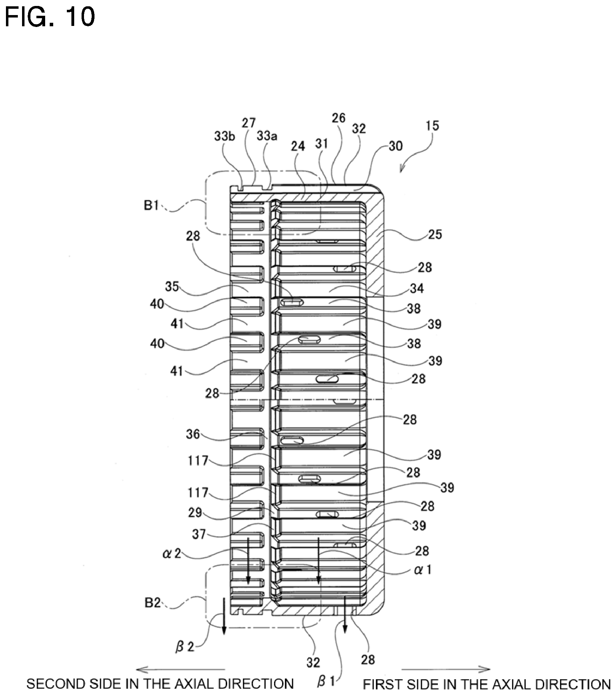

During operation of a device such as a two-speed transmission 1 into which the clutch hub 15 of the present example is incorporated, lubricating oil is supplied to a region on the inner side in the radial direction of the cylindrical portion 24 of the clutch hub 15 through lubrication paths such as the through hole 19 of the shaft member 14. The lubricating oil supplied to the region on the inner side in the radial direction of the cylindrical portion 24 moves outward in the radial direction towards the inner circumferential surface of the cylindrical portion 24 due to the effects of centrifugal force and gravity, as illustrated by arrows α1, α2 in FIG. 10.

In the present example, part of the lubricating oil supplied to the inner circumferential surface of the cylindrical portion 24 of the clutch hub 15, and more specifically, the lubricating oil supplied farther to the first side in the axial direction of the inner circumferential surface of the cylindrical portion 24 of the clutch hub 15 than the damming surface 29, is collected in the recessed portions 38 of the first side recessed and protruding uneven portion 34 by the action of centrifugal force and gravity, and then flows out outward in the radial from the cylindrical portion 24 through the oil holes 28, as illustrated by arrow β1 in FIG. 10, thereby lubricating the friction engagement portion 46 having the first friction plates 55 and the second friction plates 56.

In addition, the remaining lubricating oil supplied to the inner circumferential surface of the cylindrical portion 24 of the clutch hub 15, specifically the lubricating oil supplied to a portion of the inner circumferential surface of the cylindrical portion 24 of the clutch hub 15 farther on the second side in the axial direction than the damming surface 29, is collected in the recessed portions 40 of the second side recessed and protruding uneven portion 35 by the action of centrifugal force and gravity, moves along the inner surfaces of the recessed portions 40 to the second side in the axial direction and flows out from the inner circumferential surface of the cylindrical portion 24, and then moves outward in the radial direction along the end surface on the second side in the axial direction of the cylindrical portion 24, as illustrated by the arrow β2 in FIG. 10, thereby lubricating the engagement device 8 including the inner diameter side member 102.

Particularly, in the present example, the damming surface 29 facing the first side in the axial direction is present around the entire circumference of the inner circumferential surface of the cylindrical portion 24, in an intermediate portion in the axial direction located farther on the second side in the axial direction than the oil holes 28. Therefore, the damming surface 29 can prevent lubricating oil supplied to the portion farther on the first side in the axial direction of the inner circumferential surface of the cylindrical portion 24 than the damming surface 29 from moving along the inner circumferential surface of the cylindrical portion 24 to the portion farther on the second side in the axial direction than the damming surface 29.

More specifically, of the lubricating oil supplied to the portion of the inner circumferential surface of the cylindrical portion 24 farther on the first side in the axial direction than the damming surface 29, the lubricating oil that enters the recessed portions 38 of the first side recessed and protruding uneven portion 34 and moves to the second side in the axial direction is dammed by the side surface of the damming surface 29 on the first side in the axial direction of the circumferential protruding wall portion 36, which is located at the same circumferential position as the recessed portions 38. Lubricating oil that moves along the inner surface in the radial direction of the protruding portions 39 of the first side recessed and protruding uneven portion 34 toward the second side in the axial direction is blocked by the surfaces of the circumferential groove pieces 117 of the damming surface 29, which are located at the same circumferential position as the protruding portions 39 and face toward the first side in the axial direction.

Lubricating oil that moves along the inner surface in the radial direction of the protruding portions 39 toward the second side in the axial direction enters the circumferential groove pieces 117 and is blocked by the inner surface of the circumferential groove pieces 117 facing the first side in the axial direction, thereby preventing the lubricating oil from moving further toward the second side in the axial direction, and the lubricating oil also moves along the circumferential groove pieces 117 to the recessed portions 38 that are adjacent in the circumferential direction.

As described above, in the clutch hub 15 of the present example, it is possible to suppress the movement of lubricating oil that has been supplied to the portion of the inner circumferential surface of the cylindrical portion 24 that is farther on the first side in the axial direction than the damming surface 29, from moving along the inner circumferential surface of the cylindrical portion 24 to the portion farther on the second side in the axial direction than the damming surface 29. Therefore, it becomes easy to appropriately manage a ratio of lubricating oil supplied to the portion of the inner circumferential surface of the cylindrical portion 24 that is farther on the first side in the axial direction than the damming surface 29 to lubricate the friction engagement portion 46, and a ratio of lubricating oil supplied to the portion farther on the second side in the axial direction than the damming surface 29 to lubricate the engagement device 8. Therefore, it becomes easier to properly lubricate the friction engagement portion 46 and the engagement device 8.

### (Specific Configuration of Two-speed Transmission)

In the two-speed transmission 1 of the present example, a friction clutch device 7 is configured between the input member 4 and the rotating member 6. The friction clutch device 7 has a function to switch between a connected mode in which the input member 4 and the rotating member 6 rotate together as a single unit, and a disconnected mode in which the input member 4 and the rotating member 6 rotate relative to each other.

The friction clutch device 7 includes a first member 43, the rotating member 6 as a second member, a holding ring 44, a retaining ring 45, a friction engagement portion 46, a pressing plate 47, an elastic member 48, and a pressing device 49.

The first member 43 is connected to the input member 4 and rotates integrally with the input member 4.

In the present example, the first member 43 has a stepped cylindrical shape. More specifically, the first member 43 is configured by connecting a large-diameter cylindrical portion 50 on the first side in the axial direction and a small-diameter cylindrical portion 51 on the second side in the axial direction with a hollow disc-shaped connecting plate portion 52.

The first member 43 is connected to the input member 4 through a connecting member 53 that is formed in a substantially hollow disc shape. More specifically, an end portion on the outer side in the radial direction of the connecting member 53 is internally fitted and fixed to an end portion on the first side in the axial direction of the large-diameter cylindrical portion 50 of the first member 43, and an end portion on the inner side in the radial direction of the connecting member 53 is externally fitted and fixed to an intermediate portion in the axial direction of the input member 4, thereby connecting the first member 43 to the input member 4 so as to be able to rotate integrally.

The first member 43 has a female spline portion 54 arranged on an inner circumferential surface of the small diameter cylindrical portion 51, in which recessed portions and protruding portions are alternately arranged in the circumferential direction.

The holding ring 44 is externally fitted onto the outer circumferential surface of the large-diameter cylindrical portion 16 of the rotating member 6, on a portion located on the second side in the axial direction of the locking groove 20, without looseness in the radial direction and allowing relative displacement in the axial direction.

The retaining ring 45 is locked into the locking groove 20 of the rotating member 6, preventing displacement toward the first side in the axial direction of the holding ring 44.

The first friction plate 55 of the friction engagement portion 46 has a substantially hollow circular end surface shape when viewed from the axial direction. The first friction plate 55, by engaging an outer circumferential portion thereof with the female spline portion 54 with a spline engagement, is supported by the small-diameter cylindrical portion 51 of the first member 43 such that displacement in the axial direction is possible, and such that relative rotation is not possible.

The second friction plate 56 of the friction engagement portion 46 has a substantially hollow circular end surface shape when viewed from the axial direction. The second friction plate 56, by engaging an inner circumferential portion thereof with the first engaging portion 26 of the cylindrical portion 24 of the rotating member 6, which is the second member, with a spline engagement, is supported by the cylindrical portion 24 of the rotating member 6 such that displacement in the axial direction is possible and such that relative rotation is not possible.

Of the first friction plate 55 and the second friction plate 56 (of the plurality of first friction plates 55 and the plurality of second friction plates 56), a friction plate located the farthest on the second side in the axial direction is prevented from displacement toward the second side in the axial direction by abutting a side surface on the second side in the axial direction thereof with a side surface on the first side in the axial direction of the ring shaped supporting member 57 that is externally fitted on the cylindrical portion 24 such that relative rotation is not possible and such that displace toward the second side in the axial direction is not possible.

The supporting member 57 is not capable of relative rotation with respect to the cylindrical portion 24, by engaging an inner circumferential portion thereof with the first engaging portion 26 of the spline engagement, and is prevented from displacement toward the second side in the axial direction with respect to the cylindrical portion 24 by a retaining ring 104a that is locked in a locking groove 33a of the cylindrical portion 24.

The friction engagement portion 46 may additionally include a return spring that elastically biases the first friction plate 55 and the second friction plate 56 in directions that separates them from each other.

The pressing plate 47 faces a surface on the first side in the axial direction of a friction plate of the first friction plates 55 and the second friction plates that is located the farthest on the first side in the axial direction, and is externally fitted onto the rotating member 6, which is the second member, so as to enable back and forth movement in the axial direction with respect to the friction plate located the farthest on the first side in the axial direction.

The pressing plate 47 includes a circular ring portion 58 having a substantially hollow circular end surface shape when viewed from the axial direction, and a cylindrical portion 59 extending from an end portion of the outer side in the radial direction of the circular ring portion 58 toward the second side in the axial direction.

The circular ring portion 58 is externally fitted onto an intermediate portion in the axial direction of the large-diameter cylindrical portion 16 of the rotating member 6, allowing for relative displacement in the axial direction. Note that an end portion on the inner side in the radial direction of a side surface on the second side in the axial direction of the circular ring portion 58 faces a side surface on the first side in the axial direction of the protruding portion 21. Thus, excessive displacement of the pressing plate 47 toward the second side in the axial direction is prevented.

An end surface of the cylindrical portion 59 on the second side in the axial direction faces the surface on the first side in the axial direction of the friction plate of the first friction plates 55 and the second friction plates 56 that is located the farthest on the first side in the axial direction.

The elastic member 48 is sandwiched between the holding ring 44 and the pressing plate 47, and elastically biases the pressing plate 47 toward the second side in the axial direction. In other words, the elastic member 48, by having the pressing plate 47 pressed against the friction plate of the first friction plates 66 and the second friction plates 56 that is located the farthest on the first side in the axial direction toward the second side in the axial direction, applies an elastic force to the first friction plates 55 and the second friction plates 56 in directions that causes them to press against each other.

The configuration of the elastic member 48 is not limited to any particular type, and a disc spring, a compression coil spring, or any other elastic material can be used. The number of elastic materials of the elastic member is also arbitrary. In the present example, the elastic member 48 is formed by one or more disc springs.

The pressing device 49 presses the pressing plate 47 toward the first side in the axial direction.

In the present example, the pressing device 49 includes a cam device 60 and a device for driving the cam device 60 such as an electric actuator 61.

The cam device 60 includes a drive cam 62, a driven cam 63, and a plurality of rolling elements 64.

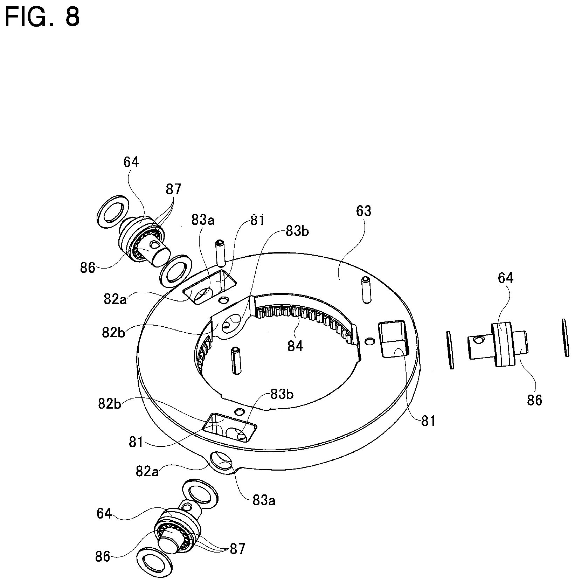

In the present example, as illustrated in FIG. 8, rollers are used as the rolling elements 64, and the rolling elements 64 are freely supported to rotate (spin) around a rotation axis C that is oriented in a radial direction from a central axis of the driven cam 63. Note that FIG. 1 to FIG. 2(b) schematically represent the cam device 60 to facilitate understanding of the disclosure.

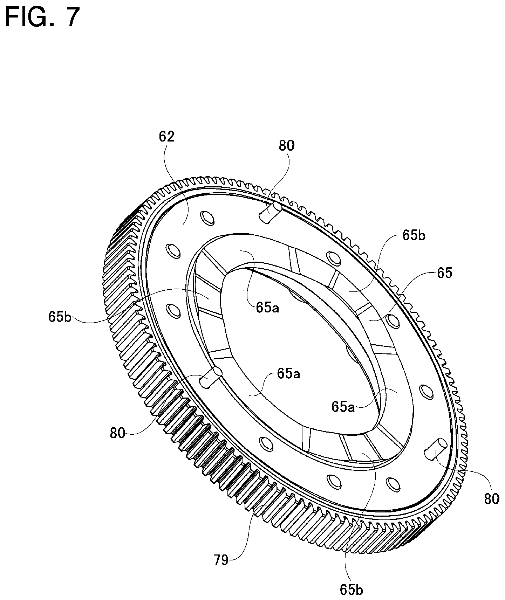

As illustrated in FIG. 7, the drive cam 62 has a drive cam surface 65 at a portion on an inner side in the radial direction of a side surface on the first side in the axial direction, and in the drive cam surface 65, an equal numbers of recessed portions 65a and protruding portions 65b are alternately arranged in the circumferential direction. The drive cam 62 is rotatably supported by the rotating member 6 by way of a support member 66, a bearing device 67, and a radial bearing 68, so as to be able to rotate relative to the rotating member 6. Note that the support member 66 and the bearing device 67 are not illustrated in FIG. 1 to FIG. 2(b).

The support member 66 includes a circular ring portion 69 having a hollow disc end surface shape when viewed from the axial direction, and a cylindrical portion 70 that is bent toward the first side in the axial direction from an end portion on an inner side in the radial direction of the circular ring portion 69.

The support member 66 is supported and fixed to the stationary portion 72 by bolts (not illustrated) that are inserted through or screwed into mounting holes 71 provided at a plurality of locations in the circumferential direction of the circular ring portion 69.

The bearing device 67 is composed of a double-row ball bearing and includes an inner ring 73 externally fitted onto the small-diameter cylindrical portion 18 of the rotating member 6, an outer ring 74 internally fitted to the cylindrical portion 70 of the support member 66, and a plurality of rolling elements 75 arranged to roll freely between the inner ring 73 and the outer ring 74.

The radial bearing 68 is composed of an angular contact ball bearing and includes an inner ring 76 externally fitted onto a portion on the second side in the axial direction of the cylindrical portion 70 of the support member 66, an outer ring 77 internally fitted to the drive cam 62, and a plurality of balls 78 arranged to roll freely between the inner ring 76 and the outer ring 77.

In the present example, the drive cam 62 has wheel teeth 79, which are helical gears, on an outer circumferential surface thereof, and has pin portions 80 that protrude toward the first side in the axial direction at a plurality of locations (three locations in the illustrated example) at an intermediate portion in the radial direction of a side surface on the first side in the axial direction. Tip-end portions of the pin portions 80 engage (loosely fit) with engagement holes provided in the selection plate 103 of the engagement device 8. As a result, the drive cam 62 and the selection plate 103 rotate together (in the same direction and at the same speed).

As illustrated in FIG. 8, the driven cam 63 is configured as a hollow disc-shaped plate and has rectangular holes 81 that penetrate in the axial direction at a plurality of locations in the circumferential direction (three locations in the illustrated example) at an intermediate portion in the radial direction, and has substantially semicircular plate-shaped support plate portions 82a, 82b that protrude from portions on both sides in the radial direction of the rectangular holes 81 toward the second side in the axial direction. Each of the support plate portions 82a on the outer side in the radial direction is provided with a support hole 83a which is a circular hole that penetrates in the radial direction, and each of the support plate portions 82b on the inner side in the radial direction is provided with a support hole 83b which is a circular hole that penetrates in the radial direction.

The driven cam 63 is arranged around the rotating member 6 so as to be able to displace only in the axial direction. More specifically, by a spline-engagement of female spline portions 84 provided on an inner circumferential surface of the driven cam 63 with male spline portions 85 provided on an outer circumferential surface of a portion on the first side in the axial direction of the cylindrical portion 70 of the support member 66 which is supported and fixed to the stationary portion 72, the driven cam 63 is supported so as to be able to displace only in the axial direction relative to the stationary portion 72.

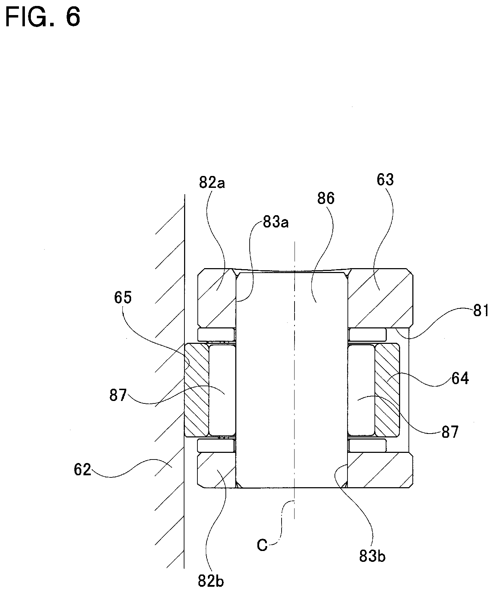

Each of the plurality of rolling elements 64 has a cylindrical shape and is supported to rotate freely relative to the support plate portions 82a, 82b through a cylindrical support shaft 86 and a plurality of rollers 87. In other words, end portions on both sides in the axial direction of the support shaft 86 are fitted and fixed into the support holes 83a, 83b. The plurality of rollers 87 are held between an inner circumferential surface of the rolling element 64 and an outer circumferential surface of an intermediate portion in the axial direction of the support shaft 86 so as to be able to freely roll. As a result, the rolling element 64 is supported by the driven cam 63 and can freely rotate (rotate) around its own axis of rotation C, which is oriented in the radial direction from the central axis of the driven cam 63. As shown in FIG. 6, an end portion on the second side in the axial direction of the outer circumferential surface of each rolling element 64 is in rolling contact with a drive cam surface 65 provided on a side surface on the first side in the axial direction of the drive cam 62.

The configuration of the rolling elements 64 of the cam device 60 is not limited to rollers and can be arbitrary, and instead of rollers, balls may also be used. In this case, in addition to the drive cam surface provided on a side surface on the first side in the axial direction of the drive cam, or instead of the drive cam surface, a driven cam surface is formed on a side surface on the second side in the axial direction of the driven cam, with an equal number of recessed portions and protruding portions arranged alternately in the circumferential direction.

In the cam device 60, as the drive cam 62 rotates, an amount by which the rolling elements 64 ride up from a bottom portion of the recessed portions 65a of the drive cam surface 65 increases or decreases, causing the driven cam 63 to displace in the axial direction.

The driven cam 63 presses the pressing plate 47 toward the first side in the axial direction through a pressing member 88 and a thrust bearing 89.

The pressing member 88 has a base portion 90 and a plurality of pressing arm portions 91.

The base portion 90 has a hollow circular plate-shaped inner diameter side plate portion 92, a cylindrical connecting cylinder portion 93 extending toward the first side in the axial direction from an end portion on an outer side in the radial direction of the inner diameter side plate portion 92, and a hollow circular plate-shaped outer diameter side plate portion 94 extending outward in the radial direction from an end portion on the first side in the axial direction of the connecting cylinder portion 93. The inner diameter side plate portion 92 of the base portion 90 is externally fitted onto the medium diameter cylindrical portion 17 of the rotating member 6 without looseness in the radial direction and allowing relative displacement in the axial direction.

Each pressing arm portion 91 protrudes toward the first side in the axial direction from an end portion on an outer side in the radial direction of the outer diameter side plate portion 94 of the base portion 90. Each pressing arm 91 is inserted through a through hole 42 provided in the side plate portion 25 of the clutch hub 15, and a tip-end surface thereof is positioned facing an intermediate portion in the radial direction of a side surface on the second side in the axial direction of the circular ring portion 58 of the pressing plate 47.

The thrust bearing 89 is configured by arranging a plurality of rolling elements 96 so as to be able to roll freely between a pair of raceway rings 95a, 95b that are spaced apart in the axial direction and arranged coaxially with respect to each other. The thrust bearing 89 is arranged between the side surface on the first side in the axial direction of the driven cam 63 and the side surface on the second side in the axial direction of the outer diameter side plate portion 94 of the pressing member 88.

The friction clutch device 7 in the present example includes a preload-applying member 97 for applying a preload to the thrust bearing 89, regardless of dimension in the axial direction of the cam device 60. The preload-applying member 97 includes a plurality of disc springs, compression coil springs, or the like. In the present example, the preload-applying member 97 is composed of a plurality of disc springs.

The preload-applying member 97 is elastically compressed and sandwiched between the side surface on the first side in the axial direction of the inner diameter side plate portion 92 of the pressing member 88 and the end surface on the second side in the axial direction of the large diameter cylindrical portion 16 of the rotating member 6. The preload-applying member 97 attempts to return to an elastic state thereof, thereby elastically pressing the pressing member 88 toward the second side in the axial direction. This applies a preload to the thrust bearing 89 and prevents the thrust bearing 89 from falling out from between the driven cam 63 and the pressing member 88.

The cam mechanism 60 is driven by an arbitrary drive device. In the present example, the drive cam 62 is rotationally driven by an electric actuator 61. The electric actuator 61 includes an electric motor 98 and a reduction gear 99. The reduction gear 99 is configured by engaging a worm 100, which is rotationally driven by the electric motor 98, with wheel teeth 79 provided on the outer circumferential surface of the drive cam 62.

Alternatively, the drive mechanism of the cam device 60 can have a structure in which a spur gear or bevel gear provided on the output shaft of an electric motor engages with a spur gear or bevel gear provided on the drive cam 62, or a structure in which a belt or chain is stretched between the output shaft of the electric motor and the drive cam 62.

In addition, as an alternative to the cam device 60, a structure can be used in which a drive cam surface provided on a drive cam and a driven cam surface provided on a driven cam are directly engaged (sliding motion), or a structure which has a driven cam having a guide groove that extends in the circumferential direction and changes in the axial direction on an outer circumferential surface thereof, and a drive cam having an engaging protruding portion that engages with the guide groove so as to enable displacement along the guide groove. Alternatively, instead of a structure combining the cam device 60 and the electric actuator 61, a hydraulic cylinder device, a gas-pressure cylinder device (including a pneumatic cylinder device), or the like can be used as the pressing device 49.

The friction clutch device 7 of the present example switches between a connected mode in which the first member 43 and the rotating member 6, which is the second member, rotate together, and a disconnected mode in which the first member 43 and the rotating member 6 rotate relative to each other, by controlling the supply of power to the electric motor 98 and adjusting a rotational phase of the drive cam 62.

As a configuration for the friction clutch device 7, a so-called normally open type clutch can be employed, in which the driven cam 63 is displaced in a direction that increases a distance in the axial direction between the driven cam 63 and the driven cam 62 based on the rotation of the drive cam 62, thereby connecting the friction engagement portion 46 (pressing the first friction plates 55 and the second friction plates 56 against each other), and the driven cam 63 is displaced in a direction that decreases the axial distance between the driven cam 63 and the drive cam 62, thereby the friction engagement portion 46 is disengaged (releasing the force pressing the first friction plates 55 and the second friction plates 56 against each other).

Alternatively, the friction clutch device 7 can be configured in a so-called normally closed type clutch, in which the driven cam 63 is displaced in a direction that reduces the axial distance between the driven cam 63 and the driven cam 62 based on the rotation of the drive cam 62, thereby connecting the friction engagement portion 46 (pressing the first friction plates 55 and the second friction plates 56 against each other), and the driven cam 63 is displaced in a direction that increases the axial distance between the driven cam 63 and the drive cam 62, thereby the friction engagement portion 46 is disengaged (releasing the force pressing the first friction plates 55 and the second friction plates 56 against each other).

In the present example, a normally closed clutch is used. In other words, to switch the friction clutch device 7 to the connected mode, the electric motor 98 is energized to rotationally drive the drive cam 62, thereby reducing the amount the rolling elements 64 ride up from the bottom portion of the recessed portions 65a of the drive cam surface 65. As a result, the driven cam 63 releases the force that presses the pressing plate 47 toward the first side in the axial direction through the pressing member 88 and the thrust bearing 89. When the force pressing the pressing plate 47 toward the first side in the axial direction is released, the elastic restoring force of the elastic member 48 causes the pressing plate 47, the pressing member 88, and the thrust bearing 89 to be pressed toward the second side in the axial direction, and the second friction plate 56, which is closest to the first side in the axial direction, is pressed toward the second side in the axial direction by the pressing plate 47. As a result, the first friction plates 55 and the second friction plates 56 press against each other, the friction clutch device 7 is connected, and the first member 43 and the rotating member 6 rotate together as a single unit.

To switch the friction clutch device 7 to the disconnected mode, the electric motor 98 is energized to rotationally rotate the drive cam 62, thereby increasing the amount the rolling elements 64 ride up from the bottom portion of the recessed portions 65a of the drive cam surface 65. Thus, the driven cam 63 presses the pressing plate 47 toward the first side in the axial direction through the pressing member 88 and the thrust bearing 89, elastically reducing the dimension in the axial direction of the elastic member 48 and releasing the force that causes the first friction plates 55 and the second friction plates 56 to press against each other. As a result, a gap between the first friction plates 55 and the second friction plates 56 widens, the friction clutch device 7 is disengaged, and the first member 43 and the rotating member 6 become able to rotate relative to each other.

In the present example, the engagement device 8 can be configured, for example, as an engaging or friction-type clutch (braking device) whose mode can be switched by an actuator. The actuator used to switch the connected and disconnected states of the clutch is not particularly limited, and a hydraulic actuator, electromagnetic actuator, or the like can be used. In the present example, the mode of the engagement device 8 is configured to be switchable based on the rotation of the drive cam 62 of the pressing device 49.

The engagement device 8 includes an outer diameter side member 101 externally fitted and fixed to the stationary portion 72, an inner diameter side member 102 internally fitted and fixed to the cylindrical portion 24, at least one engaging pin (not illustrated), and a selection plate 103.

The inner diameter side member 102 is formed in an annular shape and has an engaging recessed portion (not illustrated) on an outer circumferential surface thereof. The inner diameter side member 102 is prevented from rotating relative to the cylindrical portion 24 by a spline engagement of an inner circumferential portion with the second engaging portion 27 of the cylindrical portion 24. The inner diameter side member 102 is held from both sides in the axial direction by two retaining rings 104a, 104b that are locked in the locking grooves 33a, 33b of the cylindrical portion 24, thereby preventing displacement in the axial direction relative to the cylindrical portion 24.

The engagement pin is detachably spanned between the outer diameter side member 101 and the inner diameter side member 102. In the present example, the engaging pin is supported by the outer diameter side member 101, protrude inward in the radial direction from an inner circumferential surface of the outer diameter side member 101, and is applied with an elastic force directed inward in the radial direction. The tip-end portion of the engaging pin is designed to engage with the engaging recessed portion of the inner diameter side member 102.

The selection plate 103 has engagement holes (not illustrated) that open at a plurality of locations in the circumferential direction on a side surface on the second side in the axial direction. Tip-end portions of the pin portions 80 provided on the drive cam 62 are fitted into the engagement holes. As a result, the selection plate 103 rotates integrally with the drive cam 62 (in the same direction and at the same speed).

The selection plate 103 has a mode selection portion which is a recessed and protruding uneven portion in the circumferential direction.

Based on the rotation of the selection plate 103, the engagement device 8 switches between a state in which the outer diameter side member 101 and the inner diameter side member 102 can rotate relative to each other and a state in which they cannot rotate relative to each other. In other words, based on the rotation of the selection plate 103, the protruding portions of the mode selection portion pushes the engaging pins toward the outer side in the radial direction, thereby disengaging the engagement between the engaging pins and the engaging recessed portions, and switching the engagement device 8 to the disconnected mode. This allows the inner diameter side member 102 to rotate relative to the outer diameter side member 101, and allows the rotating member 6 to rotate relative to the stationary portion 72.

In response to this, the engagement device 8 is switched to the connected mode by moving the protruding portions of the mode selection portion to a position separated in the circumferential direction from the tip-end portions of the engaging pins based on the rotation of the selection plate 103, thereby engaging the engaging pins with the engaging recessed portions. This prevents the inner diameter side member 102 from rotating relative to the outer diameter side member 101, thereby preventing the rotating member 6 from rotating relative to the stationary portion 72.

In the present example, the planetary reduction mechanism 9 is configured as a planetary gear mechanism in which a planetary element 108, composed of a planetary gear, engages or meshes with a sun element 105 composed of a sun gear, and a ring element 106 composed of a ring gear in a manner that enables torque transmission.

The sun element 105 is connected to the input member 4 in a way that allows torque transmission, and is capable of rotating integrally with the input member 4. In the present example, the sun element 105 is integrally provided on the outer circumferential surface of an end portion on the second side in the axial direction of the input member 4.

The ring element 106 is arranged around the sun element 105 and coaxially with the sun element 105, and is connected to the rotating member 6 in a way that allows torque transmission, and so as to be able to rotate integrally with the rotating member 6. In the present example, the ring element 106 is provided on an annular member 109 that is coupled and fixed to the rotating member 6. The annular member 109 has a small-diameter cylindrical portion 110 internally fitted and fixed to an end portion on the first side in the axial direction of the rotating member 6, a hollow circular plate-shaped connecting plate portion 111 extending outward in the radial direction from an end portion on the first side in the axial direction of the small-diameter cylindrical portion 110, and a large-diameter cylindrical portion 112 extending toward the first side in the axial direction from an end portion on an outer side in the radial direction of the connecting plate portion 111. The ring element 106 is integrally provided on the inner circumferential surface of the large-diameter cylindrical portion 112.

The carrier 107 is arranged between the sun element 105 and the ring element 106 in the radial direction, coaxially with the sun element 105 and the ring element 106, and is connected to the output member 5 in a way that allows torque transmission, and so as to be able to rotate integrally with the output member 5. In the present example, the carrier 107 is integrally provided with the output member 5 at an end portion on the second side in the axial direction of the output member 5.

Each of the plurality of planetary elements 108 engages with the sun element 105 and the ring element 106, and is supported by the carrier 107 so as to be able to rotate (spin) around its own central axis.

The two-speed transmission 1 of the present example, by switching the mode of the friction clutch device 7 and the mode of the engagement device 8 by controlling a power supply to the electric motor 98 and adjusting rotational phase of the drive cam 62, can switch between a low reduction ratio mode in which the reduction ratio between the input member 4 and the output member 5 is small (the reduction ratio is 1), and a high reduction ratio mode in which the reduction ratio is larger than that of the low reduction ratio mode.

### <Low Reduction Ratio Mode>

To switch the two-speed transmission 1 to the low reduction ratio mode, the friction clutch device 7 is switched to the connected mode, and the engagement device 8 is switched to the disconnected mode.

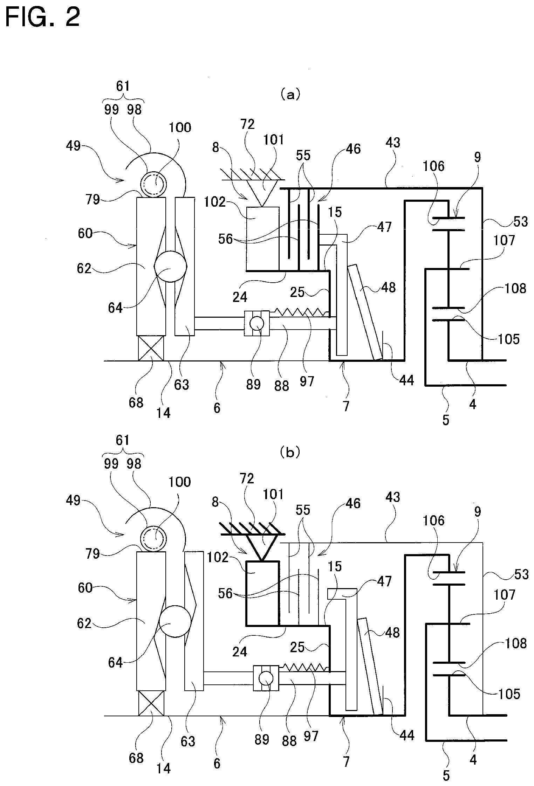

More specifically, as shown in FIG. 2(a), the drive cam 62 is rotationally driven in a direction that reduces the amount by which the rolling elements 64 ride up from the bottom portion of the recessed portions 65a of the drive cam surface 65, based on the energization of the electric motor 98. Thus, the friction clutch device 7 is switched to the connected mode, causing the input member 4, which is coupled and fixed to the first member 43, and the rotating member 6, which is the second member, to integrally rotate. As a result, the sun element 105 and the ring element 106 integrally rotate.

In addition, by adjusting the rotational phase of the selection plate 103 in conjunction with the rotation of the drive cam 62, the engagement device 8 is switched to the disconnected mode, thereby allowing relative rotation of the rotating member 6 with respect to the stationary portion 72. As a result, rotation of the ring element 106 relative to the stationary portion 72 is permitted.

In the low reduction ratio mode, the rotational direction and rotational speed of the sun element 105, the ring element 106, and the carrier 107 become the same, and the entire planetary reduction mechanism 9 integrally rotates, resulting in a so-called glued state. Therefore, the rotational torque of the input member 4 is transmitted to the output member 5 without being increased (decelerated) through the path shown by the thick line in FIG. 2(a). In other words, in the low reduction ratio mode, the reduction ratio between the input member 4 and the output member 5 is 1.

### <High Reduction Ratio Mode>

To switch the two-speed transmission 1 to the high reduction ratio mode, the friction clutch device 7 is switched to the disconnected mode, and the engagement device 8 is switched to the connected mode.

More specifically, as shown in FIG. 2(b), the drive cam 62 is rotated in a direction that increases the amount the rolling elements 64 ride up from the bottom portion of the recessed portions of the drive cam surface 65, based on the energization of the electric motor 98. This switches the friction clutch device 7 to the disconnected mode, allowing the input member 4, which is coupled and fixed to the first member 43, the rotating member 6, which is the second member, to rotate relative to each other. As a result, the sun element 105 and the ring element 106 become able to rotate relative to each other.

Moreover, by adjusting the rotational phase of the selection plate 103 in conjunction with the rotation of the drive cam 62, the engagement device 8 is switched to the connected mode, thereby preventing relative rotation of the rotating member 6 with respect to the stationary portion 72. As a result, rotation of the ring element 106 relative to the stationary portion 72 is prevented.

In the high reduction ratio mode, the rotational torque of the input member 4 is transmitted to the output member 5 through the path shown by the thick line in FIG. 2(b), that is, a path through the rotational motion of the input member 4, the sun element 105, the spinning motion of the planetary element 108, the orbital motion of the planetary element 108 based on its engagement with the ring element 106, and the carrier 107.

In the high reduction ratio mode, the rotational torque of the input member 4 is increased by the planetary reduction mechanism 9 and transmitted to the output member 5. Note that in the high reduction ratio mode, the reduction ratio between the input member 4 and the output member 5 is determined by the gear ratio between the ring element 106 and the sun element 105 (number of teeth of the ring element 106 / number of teeth of the sun element 105).

The two-speed transmission 1 can switch the reduction ratio between the input member 4 and the output member 5 between high and low by switching the mode of the friction clutch device 7 and the mode of the engagement device 8. More specifically, in the region where the rotational torque input to the input member 4 is low speed and high torque, the two-speed transmission 1 is switched to the high reduction ratio mode, and in the region where the rotational torque input to the input member 4 is high speed and low torque, the two-speed transmission 1 is switched to the low reduction ratio mode. Therefore, the acceleration performance and high-speed performance of electric vehicles and hybrid vehicles when they are running solely on an electric motor can be made close to that of gasoline-engine vehicles.

Alternatively, the planetary reduction mechanism 9 can be configured as a planetary roller mechanism in which a planetary element, composed of a planetary roller, engages or is rolling contact with a sun element, composed of a sun roller, and a ring element, composed of a ring roller, in a torque-transmitting manner.

The sun element can be connected to the rotating member in a way that allows torque transmission, the carrier can be connected to one of the input member and the output member in a way that allows torque transmission, and the ring element can be connected to the other of the input member and the output member in a way that allows torque transmission.

In the two-speed transmission 1 of the present example, since the clutch hub 15 of the present example is used, the amount of lubricating oil supplied to both the friction engagement portion 46 and the engagement device 8, which are two different components that engage with the clutch hub 15, is appropriately secured, thereby improving durability.

### [Second Example]

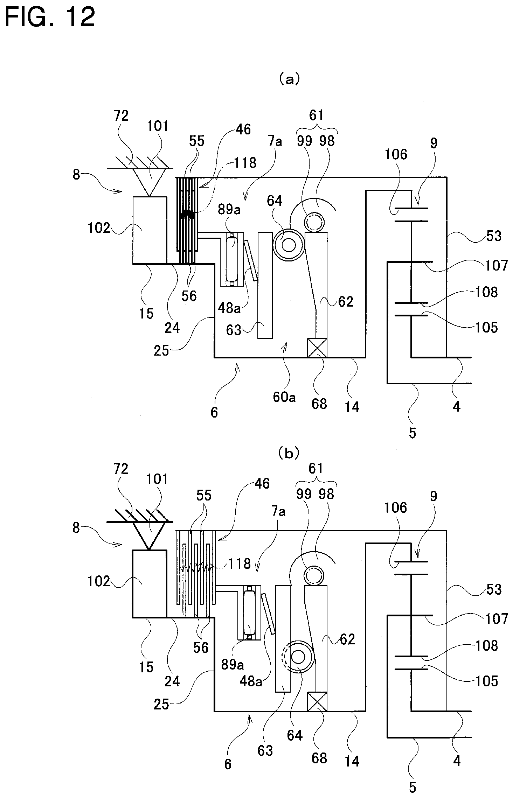

A second example of an embodiment according to the present disclosure will be described with reference to FIG. 12(a) and FIG. 12(b).

The present example differs from the first example in that a so-called normally open type clutch is used as the configuration of a friction clutch device 7a.

In the friction clutch device 7a of the present example, a cam device 60a is arranged on the first side in the axial direction of the friction engagement portion 46. Between the driven cam 63 of the cam device 60a and a friction plate located the farthest on the first side in the axial direction of the first friction plate 55 and the second friction plate 56 (among the plurality of first friction plates 55 and the plurality of second friction plates 56), an elastic member 48a and a thrust rolling bearing 89a are sandwiched in that order from the first side in the axial direction.

The elastic member 48a elastically biases the friction clutch device 7a and the driven cam 63 in a direction away from each other in the axial direction. The elastic member 48a is composed of a plurality of disc springs, compression coil springs, or the like. In the present example, the elastic member 48a is composed of a plurality of disc springs.

The friction clutch device 7a includes a return spring 118 that elastically biases the first friction plate 55 and the second friction plate 56 in directions that separate them from each other and release the force pressing the first friction plate 55 and the second friction plate 56 against each other. In the present example, the return spring 118 is stretched between a friction plate located the farthest on the first side in the axial direction and a friction plate located the farthest on the second side in the axial direction of the first friction plate 55 and the second friction plate 56 (among the plurality of first friction plates 55 and the plurality of second friction plates 56), and elastically biases the friction plate located the farthest on the first side in the axial direction and the friction plate located the farthest on the second side in the axial direction toward each other.

In the present example, in a case of switching the friction clutch device 7a to a disconnected mode in which torque is not transmitted between the rotating member 6 and the input member 4, the drive cam 62 is rotated by the electric actuator 61, thereby moving the driven cam 63 in a direction that reduces the distance in the axial direction between the driven cam 63 and the drive cam 62. Thus, a force that presses the first friction plates 55 and the second friction plates 56 against each other is lost. As a result, the return spring 118 causes a gap between the first friction plates 55 and the second friction plates 56 to widen, and the friction engagement portion 46 is disengaged, causing the friction clutch device 7a to switch to disconnected mode.

In contrast, in a case of switching the friction clutch device 7a to a connected mode in which torque is transmitted between the rotating member 6 and the input member 4, the drive cam 62 is rotated by the electric actuator 61, thereby moving the driven cam 63 in a direction that increases the distance in the axial direction between the driven cam 63 and the drive cam 62. Thus, the driven cam 63 presses the first friction plates 55 and the second friction plates 56 against each other through the elastic member 48a and the thrust rolling bearing 89a. As a result, the first friction plates 55 and the second friction plates 56 press against each other, and the friction engagement portion 46 is connected, causing the friction clutch device 7a to switch to the connected mode.

In the present example, when the friction clutch device 7a maintains the connected mode, it is necessary to keep the electric actuator 61 energized. On the other hand, when maintaining the friction clutch device 7a in the disconnected mode, it is not necessary to continuously energize the electric actuator 61.

Other configuration and effects of the second example are the same as those of the first example.

### [Third Example]

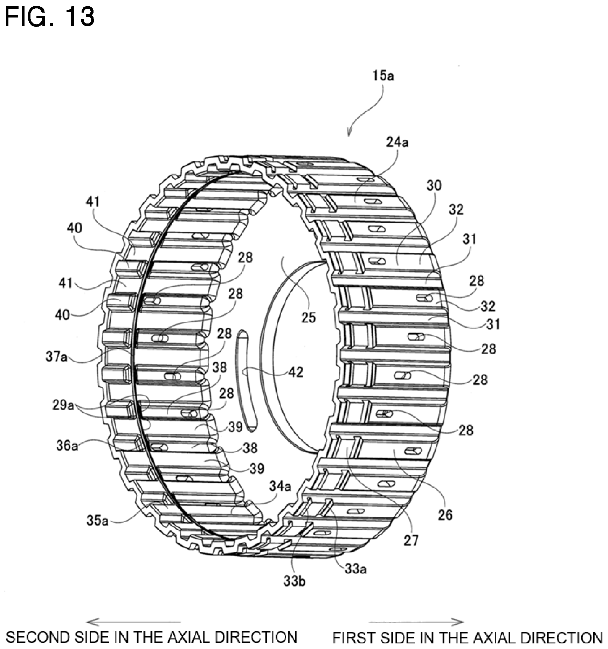

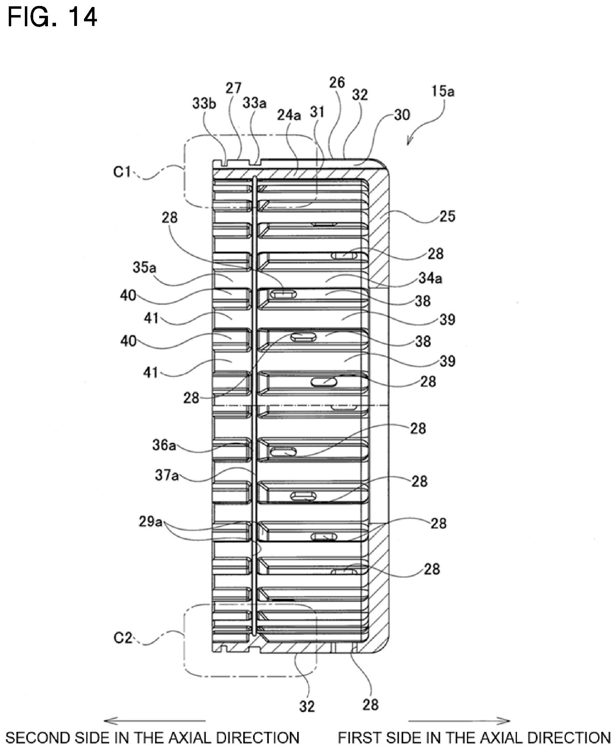

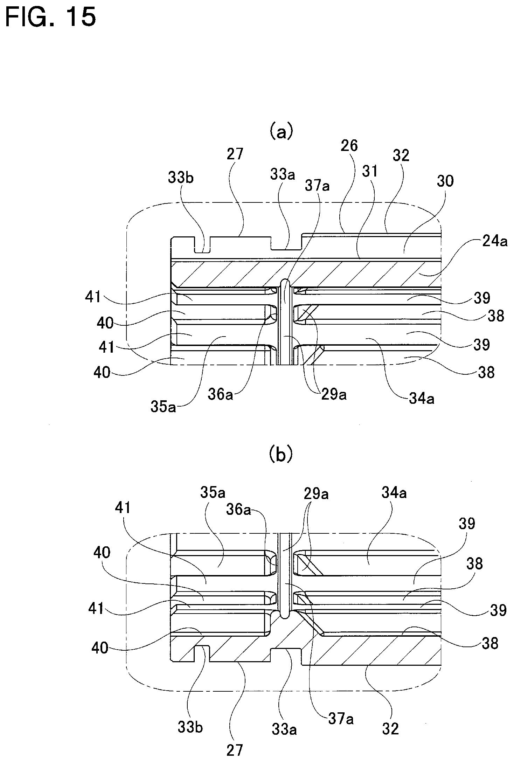

A third example of an embodiment according to the present disclosure will be described with reference to FIG. 13 to FIG. 15(b).

In the present example, a cylindrical portion 24a of a clutch hub 15a has a circumferential protruding wall portion 36a between a first side recessed and protruding uneven portion 34a and a second side recessed and protruding uneven portion 35a of the inner circumferential surface, and a circumferential groove 37a that is provided around the entire circumference in an intermediate portion in the axial direction of the inner circumferential surface of the circumferential protruding wall portion 36a. In the present example, end portions on the second side in the axial direction of the protruding portions 39 of the first side recessed and protruding uneven portion 34a are continuous with an end portion on the first side in the axial direction of the circumferential protruding wall portion 36a (inner surfaces in the radial direction of the protruding portions 39 and the inner surface in the radial direction of the circumferential protruding wall portion36a are smoothly continuous without any steps), and end portions of the recessed portions 38 of the first side recessed and protruding uneven portion 34a are closed by a side surface on the first side in the axial direction of the circumferential protruding wall portion 36a. In addition, end portions on the first side in the axial direction of the protruding portions 41 of the second side recessed and protruding uneven portion 35a are continuous with an end portion on the second side in the axial direction of the circumferential protruding wall portion 36a (the inner surfaces in the radial direction of the protruding portions 41 and the inner surface in the radial direction of the circumferential protruding wall portion 36a are smoothly continuous without any steps), and end portions on the first side in the axial direction of the recessed portions 40 of the second side recessed and protruding uneven portion 35a are closed by an end surface on the second side in the axial direction of the circumferential protruding wall portion 36a.

In the present example, a circumferential groove 37a has a concave arc-shaped cross-section, with the deepest part being in a center portion in the axial direction.

In the present example, a damming surface 29a is formed by a surface of an inner surface of the circumferential groove 37a facing the first side in the axial direction and a side surface of the circumferential protruding wall portion 36a facing the first side in the axial direction. In other words, for lubricating oil flowing toward the second side in the axial direction through the recessed portions 38 of the first side recessed and protruding uneven portion 34a, the side surface on the first side in the axial direction of the circumferential protruding wall portion 36a that closes end portions on the second side in the axial direction of the recessed portions 38 function as a damming surface 29a. In addition, for lubricating oil flowing axially toward the second side in the axial direction through the protruding portions 39 of the first side recessed and protruding uneven portion 34a, of the inner surface of the circumferential groove 37a, the surface facing the first side in the axial direction functions as a damming surface 29a.

In the structure of the present example, on the inner circumferential surface of the cylindrical portion 24a of the clutch hub 15a, the lubricating oil supplied to farther on the first side in the axial direction than the damming surface 29a, which enters the recessed portions 38 of the first side recessed and protruding uneven portion 34a and moves to the second side in the axial direction, is dammed by the side surface on the first side in the axial direction of the circumferential protruding wall portion 36a of the damming surface 29a, thereby preventing the lubricating oil from moving more toward the second side in the axial direction.

Moreover, on the inner circumferential surface of the cylindrical portion 24a, of the lubricating oil supplied to the first side in the axial direction from the damming surface 29a, the lubricating oil that moves along the inner surface in the radial direction of the protruding portions 39 of the first side recessed and protruding uneven portion 34a toward the second side in the axial direction, enters the circumferential groove 37a and is dammed by the surface of the inner surface of the circumferential groove 37a of the damming surface 29a that faces the first side in the axial direction, thereby preventing the lubricating oil from moving further to the second side in the axial direction.

Other configuration and effects of the third example are the same as those of the first example.

### [Fourth Example]

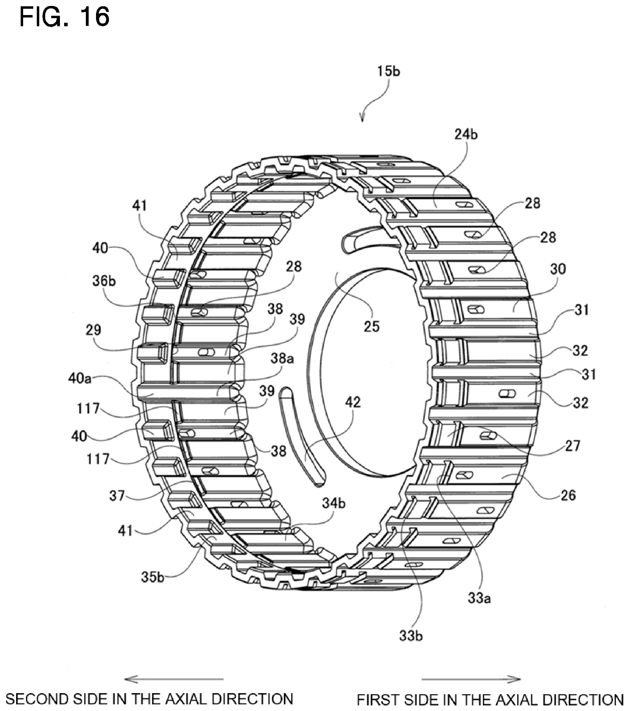

A fourth example of an embodiment according to the present disclosure will be described with reference to FIG. 16. The present example is a variation of the first example.

In a cylindrical portion 24b of a clutch hub 15b of the present example, a circumferential protruding wall portion 36b is formed only in a part of the recessed portions 38 in the circumferential direction of the recessed portions 38, 38a of the first side recessed and protruding uneven portion 34b, and the damming surface 29 is arranged therein. In at least one row of the recessed portions 38a, 40a of the recessed portions 38, 38a of the first side recessed and protruding uneven portion 34b and the recessed portions 40, 40a of the second side recessed and protruding uneven portion 35b, the circumferential protruding wall portion 36b and the circumferential groove 37 are not arranged, and the recessed portion 38a and the recessed portion 40a are configured to be continuous with the same inner diameter.

Circumferential groove pieces 117 are formed at all end portions on the second side in the axial direction of the protruding portions 39 of the first side recessed and protruding uneven portion 34b, and thus the damming surface 29 is arranged at all of the protruding portions 39 of the first side recessed and protruding uneven portion 34b. A circumferential protruding wall portion 36b is formed at the end portions on the secondr side in the axial direction of the recessed portions 38, which is a part of the recessed portions 38, 38a in the circumferential direction, of the first side recessed and protruding uneven portion 34b, and thus the damming surface 29 is arranged at all of the recessed portions 38. However, since there is no circumferential protruding wall portion 36b in the recessed portions 38a, 40a, which is at least one row of the recessed portions 38, 38a, 40, and 40a, the damming surface 29 is not arranged at the recessed portion 38a of the first side recessed and protruding uneven portion 34b. In the present example, oil holes 28 are not arranged in the recessed portions 38a where the damming surface 29 is not formed, and oil holes 28 are arranged only in the recessed portions 38 where the damming surface 29 is formed.

The lubricating oil flowing through the recessed portions 38a toward the second side in the axial direction flows out outward in the radial direction through the end portion of the second side in the axial direction and the end surface of the second end side in the axial direction of the cylindrical portion 24 through the recessed portions 40a. The number and arrangement of the recessed portions 38a and 40a that do not have oil holes 28 and a damming surface 29 are appropriately determined to the extent that they adjust the amount of lubricating oil that flows out outward in the radial direction through the oil holes 28 and the amount of lubricating oil that flows out outward in the radial direction through the end portion and the end surface on the second side in the axial direction of the cylindrical portion 24. In the present example, of the thirty-two recessed portions 38, 38a, 40, and 40a located in the circumferential direction, the recessed portions 38a, 40a are provided at equal intervals at four locations in the circumferential direction.

Other configuration and effects of the fourth example are the same as those of the first example.

### [Fifth Example]

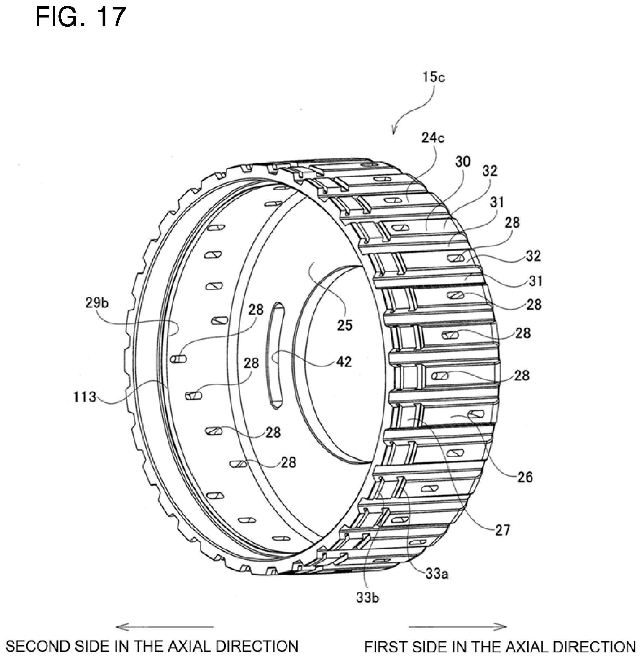

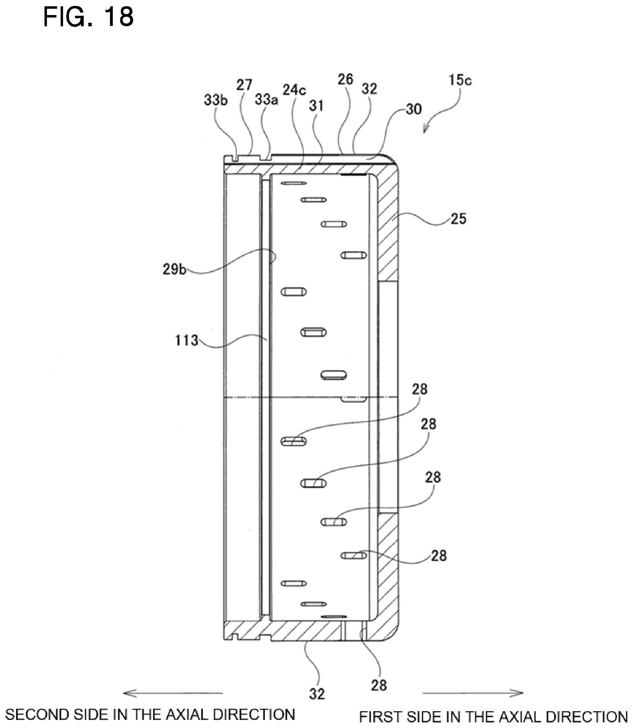

A fifth example of an embodiment according to the present disclosure will be described with reference to FIGS. 17 and 18.

In the present example, a cylindrical portion 24c of a clutch hub 15c has a circumferential projection 113 extending around the entire circumference of an intermediate portion in the axial direction of an inner circumferential surface thereof.

In the present example, the circumferential projection 113 is formed over the entire circumference of the inner circumferential surface of the cylindrical portion 24c in the intermediate portion in the axial direction, and more specifically, is formed in a portion of the inner circumferential surface of the cylindrical portion 24c that overlaps in the radial direction with the locking groove 33a on the first side in the axial direction of the two locking grooves 33a, 33b provided on the outer circumferential surface of the cylindrical portion 24c.

In the present example, the circumferential projection 113 has a rectangular cross-sectional shape.

In the present example, the damming surface 29b is formed by a side surface on the first side in the axial direction of the circumferential projection 113.

In the present example, a portion of the inner circumferential surface of the cylindrical portion 24c that is separated in the axial direction from the circumferential projection 113 is composed of a cylindrical surface whose inner diameter does not change along the axial direction.

In the structure of the present example, on the inner circumferential surface of the cylindrical portion 24c of the clutch hub 15c, lubricating oil supplied to farther on the first side in the axial direction than the damming surface 29b is dammed by the damming surface 29b, which is a side surface on the first side in the axial direction of the circumferential projection 113, thereby preventing the lubricating oil from moving further toward the second side in the axial direction.

Other configuration and effects of the fifth example are the same as those of the first example.

### [Sixth Example]

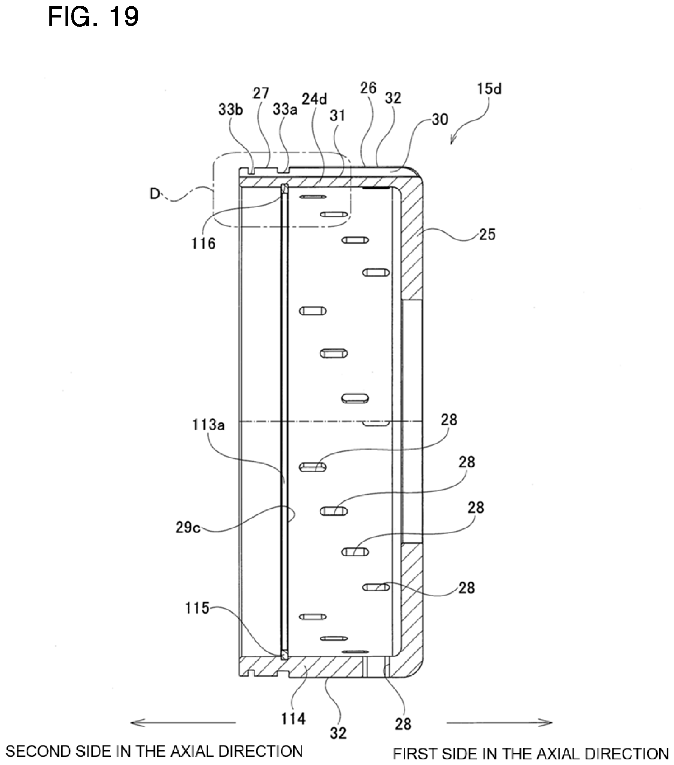

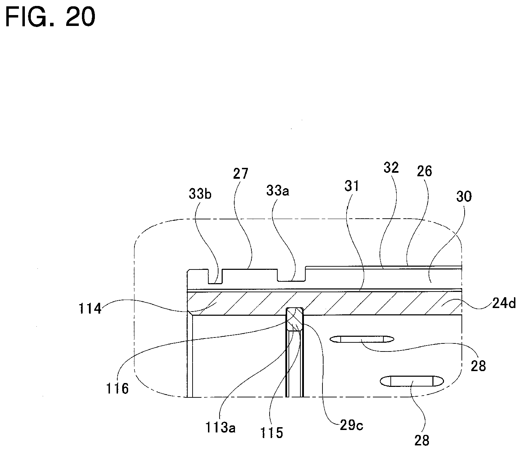

A sixth example of an embodiment according to the present disclosure will be described with reference to FIGS. 19 and 20.

In the present example, the cylindrical portion 24d of the clutch hub 15d includes a cylindrical body 114 and a ring-shaped member 115.

The cylindrical body 114 has a locking groove 116 extending around the entire circumference in an intermediate portion in the axial direction of an inner circumferential surface thereof.

The ring-shaped member 115 is locked in the locking groove 116 at a portion on the outer side in the radial direction. In the present example, a circumferential projection 113a is formed by a portion of the ring-shaped member 115 that protrudes inward in the radial direction from the locking groove 116.

In the present example, the ring-shaped member 115 has an annular shape that is continuous around the entire circumference when viewed from the axial direction. In the present example, the ring-shaped member 115 is made of a spiral retaining ring, which is a retaining ring formed by winding material spirally around one or more times (for example, about two times).

In the present example, the damming surface 29c is formed by a side surface on the first side in the axial direction of the circumferential projection 113a.

In the structure of the present example, lubricating oil supplied farther to the first side in the axial direction than the damming surface 29c on the inner circumferential surface of the cylindrical portion 24d of the clutch hub 15d is blocked by the damming surface 29c, thereby preventing lubricating oil from moving further toward the second side of the axial direction.

Other configuration and effects of the sixth example are the same as those of the first example.

In implementing a clutch hub or two-speed transmission according to one aspect of the present disclosure, the first to sixth examples of the embodiments can be combined as appropriate, provided that they do not contradict each other.

For example, in the structure of the third example, at least one row of the recessed portions among the recessed portions of the first side recessed and protruding uneven portion and the recessed portions of the second side recessed and protruding uneven portion may be configured such that there is no circumferential protruding wall portion and a circumferential groove, and the recessed portions of this row are continuous in a state in which the inner diameters are the same.

### REFERENCE SIGNS LIST

1 Two-speed transmission
2 Drive source
3 Differential device
4 Input member
5 Output member
6 Rotating member (Second member)
7, 7a Friction clutch device
8 Engagement device
9 Planetary reduction mechanism
10 Output shaft
11 Drive gear
12 Input gear
13 Output gear
**14** Shaft member
15, 15a, 15b, 15c, 15d Clutch hub
16 Large diameter cylindrical portion
17 Medium diameter cylindrical portion
18 Small diameter cylindrical portion
19 Through hole
20 Locking groove
21 Protruding portion
22 Fitting surface portion
23 Step surface
24, 24a, 24b, 24c, 24d Cylindrical portion
25 Side plate portion
26 First engaging portion
27 Second engaging portion
28 Oil hole
29, 29a, 29b, 29c Damming surface
30 Male spline portion
31 Recessed portion
32 Protruding portion
33a, 33b Locking groove
34, 34a, 34b First side recessed and protruding uneven portion
35, 35a, 35b Second side recessed and protruding uneven portion
36, 36a, 36b Circumferential protruding wall portion
37, 37a Circumferential groove
38, 38a Recessed portion
39 Protruding portion
40, 40a Recessed portion
41 Protruding portion
42 Through hole
43 First member
44 Holding ring
45 Retaining ring
46 Friction engagement portion
47 Pressing plate
48 Elastic member
49 Pressing device
50 Large diameter cylindrical portion
51 Small diameter cylindrical portion
52 Connecting plate portion
53 Connecting member
54 Female spline portion
55 First friction plate
56 Second friction plate
57 Supporting member
58 Circular ring portion
59 Cylindrical portion
60, 60a Cam device
61 Electric actuator
62 Drive cam
63 Driven cam
64 Rolling element
65 Drive cam surface
65a Recessed portion
65b Protruding portion
66 Support member
67 Bearing device
68 Radial bearing
69 Circular ring portion
70 Cylindrical portion
71 Mounting hole
72 Stationary portion
73 Inner ring
74 Outer ring
75 Rolling element
76 Inner ring
77 Outer ring
78 Ball
79 Wheel teeth
80 Pin portion
81 Rectangular hole
82a, 82b Support plate portion
83a, 83b Support hole
84 Female spline portion
85 Male spline portion
86 Support shaft
87 Roller
88 Pressing member
89 Thrust bearing
90 Base portion
91 Pressing arm portion
92 Inner diameter side plate portion
93 Connecting cylinder portion
94 Outer diameter side plate portion
95a, 95b Raceway ring
96 Rolling element
97 Preload-applying member
98 Electric motor
99 Reduction gear
100 Worm
101 Outer diameter side member
102 Inner diameter side member
103 Selection plate
104a, 104b Retaining ring
105 Sun element
106 Ring element
107 Carrier
108 Planetary element
109 Annular member
110 Small diameter cylindrical portion
111 Connecting plate portion
112 Large diameter cylindrical portion
113, 113a, 113b Circumferential projection
114 Cylindrical body
115 Ring-shaped member
116, 116a Locking groove
117 Circumferential grooved piece
118 Return spring
200, 200a Clutch hub
201, 201a Cylindrical portion
202, 202a Side plate portion
203, 203a Male spline portion
204, 204a Oil hole
205, 205a Recessed portion
206, 206a Protruding portion
207, 207a Recessed and protruding uneven portion
208 Dam portion

## Claims

1. A clutch hub, comprising:
a cylindrical portion having a first engaging portion arranged at a portion on a first side in an axial direction of an outer circumferential surface thereof and into which a component of a friction clutch device engages, a second engaging portion arranged on a second side in the axial direction of the outer circumferential surface and into which a component of a device separate from the friction clutch device engages, and oil holes that penetrate in a radial direction through a plurality of locations in a same range in the axial direction as the first engaging portion; and
a side plate portion extending inward in the radial direction from an end portion on the first side in the axial direction of the cylindrical portion;
the cylindrical portion having a damming surface at an intermediate portion in the axial direction located farther on the second side in the axial direction than the oil holes on an inner circumferential surface thereof, the damming surface facing the first side in the axial direction, with an inner diameter of the damming surface being less than or equal to an inner diameter of a portion having a smallest inner diameter of a portion on the inner circumferential surface located farther on the first side in the axial direction than the damming surface.

2. The clutch hub according to claim 1, wherein
the cylindrical portion has a male spline portion in which recessed portions and protruding portions are alternatively arranged in a circumferential direction on the outer circumferential surface; and
the first engaging portion is formed by a portion on the first side in the axial direction of the male spline portion, and the second engaging portion is formed by a portion on the second side in the axial direction of the male spline portion.

3. The clutch hub according to claim 1, wherein
the cylindrical portion includes:
a first side recessed and protruding uneven portion provided at a portion on the inner circumferential surface overlapping the first engaging portion in the radial direction and including recessed portions and protruding portions alternatively arranged in the circumferential direction;
a second side recessed and protruding uneven portion provided at a portion on the inner circumferential surface overlapping the second engaging portion in the radial direction and including recessed portions and protruding portions alternatively arranged in the circumferential direction;
a circumferential protruding wall portion formed at a portion adjacent to the first side in the axial direction of the second side recessed and protruding uneven portion on the inner circumferential surface; and
a circumferential groove formed at a portion between the first side recessed and protruding uneven portion and the second side recessed and protruding uneven portion on the inner circumferential surface;
end portions on an inner side in the radial direction of the oil holes open into the recessed portions of the first side recessed and protruding uneven portion; and
the damming surface is formed by a surface of an inner surface of the circumferential groove facing toward the first side in the axial direction and a side surface on the first side in the axial direction of the circumferential protruding wall portion.

4. The clutch hub according to claim 3, wherein
the circumferential groove is formed at end portions on the second side in the axial direction of the protruding portions of the first side recessed and protruding uneven portion, so as to cross in the circumferential direction the end portions on the second side in the axial direction of the protruding portions.

5. The clutch hub according to claim 3, wherein
the circumferential groove is formed in an intermediate portion in the axial direction of the circumferential protruding wall portion.

6. The clutch hub according to claim 4 or claim 5, wherein
the damming surface is formed around an entire circumference of the inner circumferential surface.

7. The clutch hub according to claim 4 or claim 5, wherein
the damming surface is arranged only at part of the recessed portions of the first side recessed and protruding uneven portion with respect to the circumferential direction.

8. The clutch hub according to claim 1 or claim 2, wherein
the cylindrical portion has a circumferential projection formed at an intermediate portion in the axial direction over an entire circumference of the inner circumferential surface;
the damming surface is formed by a side surface on the first side in the axial direction of the circumferential projection.

9. The clutch hub according to claim 8, wherein
the cylindrical portion includes:
a locking groove formed at an intermediate portion in the axial direction of the inner circumferential surface and extending in the circumferential direction; and
a ring-shaped member having a portion on an outer side in the radial direction that is locked in the locking groove; and
the circumferential projection is formed by a portion of the ring-shaped member that protrudes inward in the radial direction from the locking groove.

10. A two-speed transmission, comprising:
an input member rotatably supported by a stationary portion that does not rotate even during use;
an output member supported coaxially with the input member and capable of relative rotation with respect to the input member;
a rotating member supported coaxially with the input member and the output member and capable of relative rotation with respect to the input member and the output member;
a friction engagement portion having a first friction plate and a second friction plate supported to allow relative displacement in an axial direction, the friction engagement portion being provided between the input member or the output member and the rotating member, and configured to switch the input member or the output member and the rotating member to a state so as to rotate as a single unit by a force pressing the first friction plate and the second friction plate against each other, and configured to switch the input member or the output member and the rotating member to a state so as to rotate relative to each other by releasing the force pressing the first friction plate and the second friction plate against each other;
an engagement device provided between the stationary portion and the rotating member, and configured to switch between a state in which the rotating member can rotate relative to the stationary portion and a state in which the rotating member cannot rotate relative to the stationary portion;
a planetary reduction mechanism including a sun element, a ring element arranged around the sun element, a carrier arranged in the radial direction between the sun element and the ring element, and a plurality of planetary elements rotatably supported by the carrier and engaging with the sun element and the ring element in a manner that enables torque transmission;
an input element that is one of the sun element, the ring element, and the carrier, being connected to the input member so as to rotate integrally with the input member;
an output element that is one of the sun element, the ring element, and the carrier, and is a different element from the input element, being connected to the output member so as to rotate integrally with the output member;
a rotating element that is the remaining elements of the sun element, the ring element, and the carrier excluding the input element and the output element, being connected to the rotating member so as to rotate integrally with the rotating member;
the rotating member including the clutch hub according to any one of claims 1 to 9;
the first friction plate or the second friction plate engaging with the first engaging portion of the cylindrical portion; and
a component of the engagement device being engaged with the second engaging portion of the cylindrical portion.
